# EUROPEAN PATENT APPLICATION

(11) **EP 4 701 049 A1**
(43) Date of publication of application: **25.02.2026**
(21) Application number: 25197633.8
(22) Date of filing: 22.08.2025
(51) Int. Cl.: H02K 3/18, H02K 3/28, H02K 3/52, H02K 15/095, H02K 15/33

(54) **STATOR, ELECTRICAL ROTATING MACHINE, STATOR WINDING METHOD, AND STATOR MANUFACTURING METHOD**

(30) Priority: 23.08.2024 JP 2024143900
(71) Applicant: Odawara Engineering Co., Ltd., Ashigarakami-gun, Kanagawa 258-0003 (JP)
(72) Inventor: YOKOYAMA, Akihiko, Kanagawa, 258-0003 (JP); MIYAWAKI, Noburo, Kanagawa, 258-0003 (JP)
(74) Representative: Prüfer & Partner mbB Patentanwälte · Rechtsanwälte

(57) **Abstract**

Three-phase windings are wound, with a conductor (43), around twelve magnetic pole teeth (T1 to T12) arranged at equal angular intervals on an inner peripheral portion of a stator core (10) configured to constitute a three-phase, twelve-pole stator. The winding of each phase comprises, at least at one location, a portion in which the conductor (43) is drawn out from one of the slots (S) to form a lead-out portion (112) and is then returned to the same slot (S), and the conductor (43) on both sides of the lead-out portion (112) is fixed within the one slot (S) by the conductor wound around one of the magnetic pole teeth (T) forming the one slot (S) after the lead-out portion (112) has been formed.

## Description

### [Technical Field]

The present invention relates to a three-phase, twelve-pole stator for use in an electrical rotating machine such as a motor, in which three-phase coils are wound with a conductor around twelve magnetic pole teeth provided at equal angular intervals on an inner peripheral portion of a stator core. The present invention also relates to an electrical rotating machine including such a stator, and a winding method and manufacturing method of such a stator.

In electrical rotating machines such as motors, it is common to wind three-phase coils on a stator and connect them in a star connection. In such a configuration, increasing the number of parallel connections of the coils for each phase generally reduces electrical resistance and improves energy efficiency. In recent years, due to growing environmental concerns, there has been an increasing demand for energy conservation, and accordingly, the parallelization of coils has been strongly required.

However, when the coils are connected in parallel, the number of lead wires for connection to the power supply and the number of neutral lines for connection to a neutral point increase with the number of parallel paths, resulting in increased manufacturing time and larger complexity in the production process. In addition, increasing the number of magnetic pole teeth to allow for more parallel connections leads to an increase in the total number of coil turns per stator, which further increases the manufacturing time.

In this regard, PTL1 discloses a winding method in which three-phase coils are wound around a stator core provided with nine magnetic pole teeth arranged at equal angular intervals on its inner peripheral portion, and in which, for each phase, three lead wires serving as power supply lines for three coils exit from the same slot, thereby improving work efficiency.

PTL2 to PTL4 disclose various winding structures used when winding three-phase coils around a stator core provided with nine or twelve magnetic pole teeth arranged at equal angular intervals on its inner peripheral portion.

### [Citation List]

### [Patent Literature]

[PTL1] Japanese Patent Publication No. 4704177
[PTL2] Japanese Patent Publication No. 7371714
[PTL3] Japanese Patent Application Laid-Open Publication No. 2024-40580
[PTL4] Japanese Patent Publication No. 7434719

### [Summary of Invention]

### [Technical Problem]

However, in the winding method and winding structures described in PTL1 to PTL4, the work efficiency of connecting three-phase coils to power supplies and a neutral point was not sufficient, in the case of a three-phase, twelve-pole stator in which the coils are wound with conductors around twelve magnetic pole teeth provided at equal angular intervals on an inner peripheral portion of a stator core.

For example, PTL 1 discloses, in a three-phase, nine-pole stator, a configuration in which, for each phase, three power supply wires for three coils each forming a pole are drawn out from the same slot of the stator core toward one end face of the stator core, and the three power supply wires are fixed by being embedded in the coil wound around the same magnetic pole tooth.

However, no method is disclosed for achieving a similar configuration in a three-phase, twelve-pole stator.

The present invention has been made in view of the foregoing circumstances and an object thereof is to improve manufacturing efficiency of windings in a three-phase, twelve-pole stator in which three-phase coils are wound with a conductor around twelve magnetic pole teeth provided at equal angular intervals on an inner peripheral portion of a stator core, particularly in terms of improving the efficiency of wiring work for the coils. Another object of the present invention is to improve manufacturing efficiency of three-phase, twelve-pole stators and electrical rotating machines such as motors, incorporating the stator.

### [Solution to Problem]

A stator according to the present invention is intended to achieve the above-described objects, and includes: a stator core including twelve magnetic pole teeth arranged at equal angular intervals on an inner peripheral portion thereof, and slots formed between adjacent magnetic pole teeth; and three-phase windings formed of a conductor and wound around the twelve magnetic pole teeth of the stator core. The winding of each phase includes, at least at one location, a portion in which the conductor is drawn out from one of the slots to form a lead-out portion and is then returned to the same slot, and the conductor on both sides of the lead-out portion is fixed within the one slot by the conductor wound around one of the magnetic pole teeth forming the one slot after the lead-out portion has been formed.

As an example, in such a stator, it is conceivable that the winding of each phase is configured to allow wiring in which four coils wound around respective magnetic pole teeth are connected in parallel, and wherein all lead sections configured to connect the respective four coils of the three phases to power supplies are drawn out from any of six circumferentially consecutive slots among the twelve slots provided around the entire circumference of the stator core.

Alternatively, it is also conceivable that the winding of each phase includes a first portion and a second portion formed by separate conductors, respectively, and that when two axial end faces of the stator core are defined as a first end face and a second end face, respectively; and the twelve magnetic pole teeth are defined as, in order toward a first circumferential direction that is one of circumferential directions of the stator core, a first tooth through a twelfth tooth, respectively, the conductor is wound as described in (a1) to (a6) below in the first portion of one of the three phases:
(a1) drawn into a first slot adjacent to the first tooth from the first end face side;
(a2) continuously wound around the first tooth in a first direction;
(a3) continuously drawn out from the first slot to the second end face side and routed as a linking portion along the second end face side to a position of a second slot adjacent to the fourth tooth;
(a4) continuously drawn into the second slot from the second end face side, drawn out to the first end face side without being wound around any magnetic pole tooth, pulled out by a predetermined length, and drawn again into the second slot from the first end face side to form a first lead-out portion, which is the lead-out portion, on the first end face side;
(a5) continuously wound around the fourth tooth in a second direction opposite to the first direction; and
(a6) continuously drawn out to the first end face side from a third slot, which is adjacent to the fourth tooth and located on a side opposite to the second slot with respect to the fourth tooth.

Further, it is conceivable that the conductor is wound as described in (b1) to (b7) below in the second portion of one of the three phases:
(b1) drawn into a fourth slot adjacent to the seventh tooth from the first end face side;
(b2) continuously wound around the seventh tooth in the first direction;
(b3) continuously drawn out to the first end face side from the fifth slot, which is adjacent to the seventh tooth and located on a side opposite to the fourth slot with respect to the seventh tooth, pulled out by a predetermined length, and drawn again into the fifth slot from the first end face side to form a second lead-out portion on the first end face side;
(b4) continuously drawn out from the fifth slot to the second end face side and routed as a linking portion along the second end face side to a position of a sixth slot adjacent to the tenth tooth;
(b5) continuously drawn into the sixth slot from the second end face side;
(b6) continuously wound around the tenth tooth in the second direction; and
(b7) continuously drawn out to the first end face side from the sixth slot.

Further, it is conceivable that the first slot is located between the first tooth and the second tooth, the second slot is located between the fourth tooth and the third tooth, the third slot is located between the fourth tooth and the fifth tooth, the fourth slot is located between the seventh tooth and the eighth tooth, the fifth slot is located between the seventh tooth and the sixth tooth, and the sixth slot is located between the tenth tooth and the eleventh tooth.

Alternatively, it is also conceivable that the first slot is located between the first tooth and the twelfth tooth, the second slot is located between the fourth tooth and the fifth tooth, the third slot is located between the fourth tooth and the third tooth, the fourth slot is located between the seventh tooth and the sixth tooth, the fifth slot is located between the seventh tooth and the eighth tooth, and the sixth slot is located between the tenth tooth and the ninth tooth.

Further, in any of the above-described stators including the features (a1) to (b7), it is conceivable that the windings of the three phases differ from one another in their circumferential positions by one magnetic pole tooth.

Alternatively, in any of the above-described stators including the features (a1) to (b7), it is conceivable that all end wires of the first portion and the second portion of each phase are connected to a common neutral point, and that, for each phase, the first lead-out portion and the second lead-out portion are gathered to form a lead section configured to be connected to a power supply of the corresponding phase.

As another example, in the above-described stators, it is conceivable that all lead sections configured to connect the windings of the three phases to power supplies are drawn out from any of three circumferentially consecutive slots among the twelve slots provided around the entire circumference of the stator core.

Alternatively, it is also conceivable that when two axial end faces of the stator core are defined as a first end face and a second end face, respectively; and the twelve magnetic pole teeth are defined as, in order toward a first circumferential direction that is one of circumferential directions of the stator core, a first tooth through a twelfth tooth, respectively, the conductor is wound as described in (c1) to (c12) below in the winding of one of the three phases:
(c1) drawn into a first slot adjacent to the first tooth from the first end face side;
(c2) continuously wound around the first tooth in a first direction;
(c3) continuously drawn out from the first slot to the second end face side and routed as a linking portion along the second end face side to a position of a second slot adjacent to the fourth tooth;
(c4) continuously drawn into the second slot from the second end face side;
(c5) continuously wound around the fourth tooth in the first direction;
(c6) continuously drawn out from the third slot, which is adjacent to the fourth tooth and located on a side opposite to the second slot with respect to the fourth tooth, to the second end face side and routed as a linking portion along the second end face side to a position of a fourth slot adjacent to the seventh tooth;
(c7) continuously drawn into the fourth slot from the second end face side, drawn out to the first end face side without being wound around any magnetic pole tooth, pulled out by a predetermined length, and drawn again into the fourth slot from the first end face side to form the lead-out portion on the first end face side;
(c8) continuously wound around the seventh tooth in a second direction opposite to the first direction;
(c9) continuously drawn out from the fourth slot to the second end face side and routed as a linking portion along the second end face side to a position of a fifth slot adjacent to the tenth tooth;
(c10) continuously drawn into the fifth slot from the second end face side;
(c11) continuously wound around the tenth tooth in the second direction; and
(c12) continuously drawn out to the first end face side from the fifth slot.

Further, it is conceivable that the first slot is located between the first tooth and the second tooth, the second slot is located between the fourth tooth and the third tooth, the third slot is located between the fourth tooth and the fifth tooth, the fourth slot is located between the seventh tooth and the sixth tooth, and the fifth slot is located between the tenth tooth and the eleventh tooth.

Alternatively, it is also conceivable that the first slot is located between the first tooth and the twelfth tooth, the second slot is located between the fourth tooth and the fifth tooth, the third slot is located between the fourth tooth and the third tooth, the fourth slot is located between the seventh tooth and the eighth tooth, and the fifth slot is located between the tenth tooth and the ninth tooth.

Further, in any of the above-described stators including the features (c1) to (c12), it is conceivable that the windings of the three phases differ from one another in their circumferential positions by one magnetic pole tooth.

Alternatively, in any of the above-described stators including the features (c1) to (c12), it is conceivable that all end wires of the windings of the three phases are connected to a common neutral point, and that, for each phase, the lead-out portion forms a lead section configured to be connected to a power supply of the corresponding phase.

As a further example, in the above-described stators, it is conceivable that the winding of each phase includes two coils, each wound in series around two adjacent magnetic pole teeth and having different winding directions on the respective magnetic pole teeth, and that all lead sections configured to connect the two coils of each of the three phases to power supplies are drawn out from any of five circumferentially consecutive slots among the twelve slots provided around the entire circumference of the stator core.

Alternatively, it is also conceivable that when two axial end faces of the stator core are defined as a first end face and a second end face, respectively; and the twelve magnetic pole teeth are defined as, in order toward a first circumferential direction that is one of circumferential directions of the stator core, a first tooth through a twelfth tooth, respectively, the conductor is wound as described in (d1) to (d8) below in the winding of one of the three phases:
(d1) drawn into a first slot adjacent to the first tooth from the first end face side;
(d2) continuously wound around the first tooth in a first direction;
(d3) continuously wound around the second tooth in a second direction opposite to the first direction;
(d4) drawn out to the second end face side from a second slot adjacent to the second tooth, after completing the winding around the second tooth at the second slot, and routed as a linking portion along the second end face side to a position of a third slot adjacent to the seventh tooth;
(d5) continuously drawn into the third slot from the second end face side, drawn out to the first end face side without being wound around any magnetic pole tooth, pulled out by a predetermined length, and drawn again into the third slot from the first end face side to form the lead-out portion on the first end face side;
(d6) continuously wound around the seventh tooth in the first direction;
(d7) continuously wound around the eighth tooth in the second direction; and
(d8) drawn out to the first end face side from a fourth slot adjacent to the eighth tooth, after completing the winding around the eighth tooth at the fourth slot.

Further, it is conceivable that the first slot is located between the first tooth and the twelfth tooth, the second slot is located between the second tooth and the third tooth, the third slot is located between the seventh tooth and the sixth tooth, and the fourth slot is located between the eighth tooth and the seventh tooth.

Alternatively, it is also conceivable that the first slot is located between the first tooth and the second tooth, the second slot is located between the second tooth and the first tooth, the third slot is located between the seventh tooth and the eighth tooth, and the fourth slot is located between the eighth tooth and the ninth tooth.

Further, in any of the above-described stators including the features (d1) to (d8), it is conceivable that the windings of the three phases differ from one another in their circumferential positions by two magnetic pole teeth.

Alternatively, in any of the above-described stators including the features (d1) to (d8), it is conceivable that all end wires of the windings of the three phases are connected to a common neutral point, and that, for each phase, the lead-out portion forms a lead section configured to be connected to a power supply of the corresponding phase.

Further, the present invention provides also an electrical rotating machine including any of the above-described stator.

The present invention is not limited to the stator or the electrical rotating machine described above, but can be implemented in any form including: an armature including such stator or electrical rotating machine; winding method or manufacturing method of such stator or electrical rotating machine; a winding apparatus that performs a winding method; an armature wound by a winding apparatus; a computer program for controlling a winding apparatus; a non-transitory machine-readable storage medium storing such a computer program; and a system including multiple devices.

One stator winding method according to the present invention is a stator winding method of winding three-phase windings, with a conductor, around twelve magnetic pole teeth arranged at equal angular intervals on an inner peripheral portion of a stator core configured to constitute a three-phase, twelve-pole stator, wherein slots are formed between adjacent magnetic pole teeth. In this method, the winding of one of the three phases is formed by a process through movement of at least one of: a first nozzle corresponding to the one phase; and the stator core, while feeding the conductor from the first nozzle. The process includes drawing the first nozzle out from one of the slots to one end face side of the stator core, pulling out the conductor by a predetermined length, and then re-inserting the first nozzle into the one slot from the one end face side, thereby forming a lead-out portion of the conductor on the one end face side.

### [Effect of the Invention]

According to the present invention described above, manufacturing efficiency of winding in a three-phase, twelve-pole stator in which three-phase coils are wound with a conductor around twelve magnetic pole teeth provided at equal angular intervals on an inner peripheral portion of a stator core can be improved, particularly in terms of improving the efficiency of wiring work for the coils. Further, manufacturing efficiency of three-phase, twelve-pole stators and electrical rotating machines such as motors, incorporating the stator can be improved.

### [Brief Description of Drawings]

[Fig. 1] Fig. 1 is a schematic plan view of a stator core to be wound according to an embodiment of the present invention, as viewed from the side where a linking portion is formed.
[Fig. 2] Fig. 2 is a schematic plan view similar to Fig. 1, showing a stator formed by winding windings including three-phase coils around the stator core shown in Fig. 1.
[Fig. 3] Fig. 3A and Fig. 3B are schematic views illustrating a winding structure according to the first embodiment of the present invention. Fig. 3A shows the winding structure of only the U-phase, and Fig. 3B shows the winding structure of all three phases.
[Fig. 4] Fig. 4 is a diagram for explaining a star connection structure that can be implemented using the windings shown in Fig. 3B.
[Fig. 5] Fig. 5 is a diagram for explaining a wiring operation to be performed on the windings shown in Fig. 3B to form the star connection shown in Fig. 4.

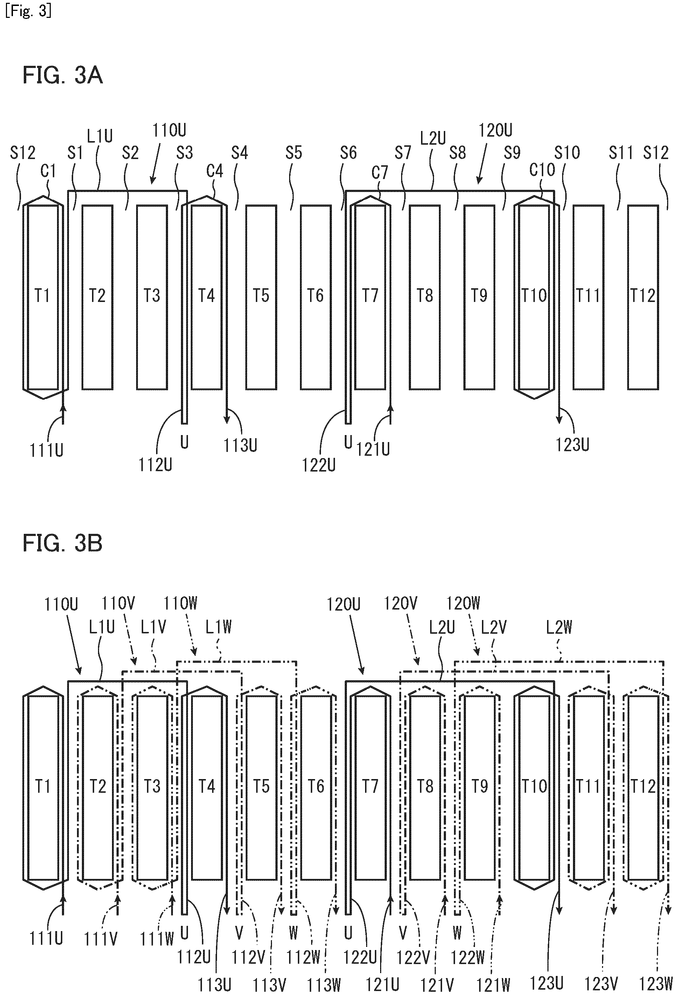

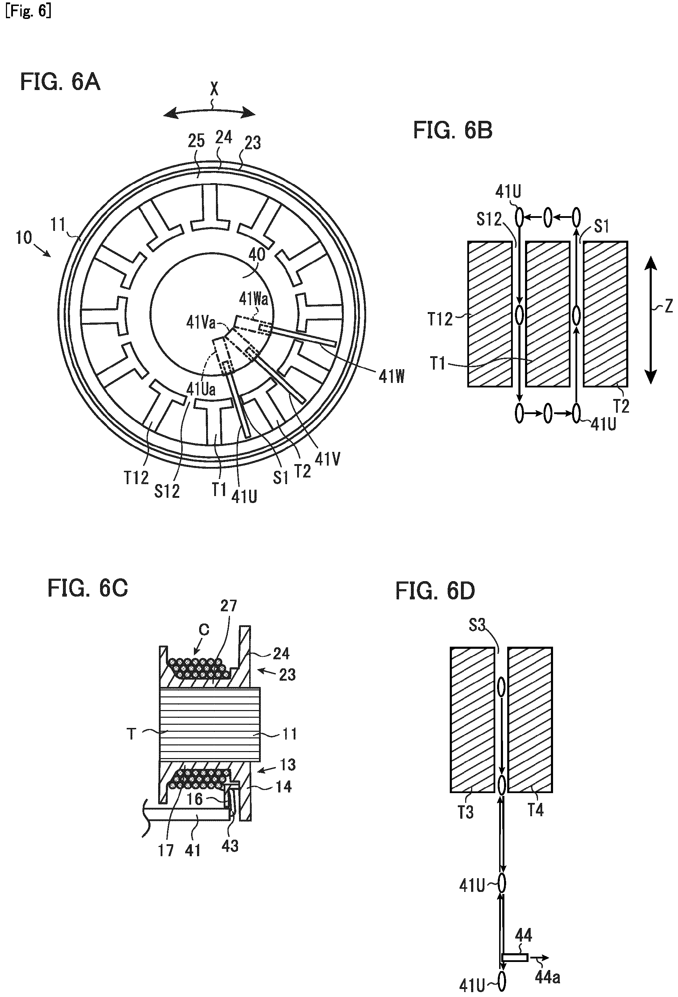

[Fig. 6] Figs. 6A to 6D are diagrams for explaining a winding apparatus for forming the windings shown in Fig. 3B and an example of a winding procedure using the winding apparatus. Fig. 6A is a diagram showing a nozzle arrangement in the winding apparatus. Fig. 6B is a diagram showing a path of relative movement between the nozzle and magnetic pole teeth when winding a wire around a magnetic pole tooth. Fig. 6C is a diagram showing a positional relationship between the nozzle and a pin during formation of a linking portion. Fig. 6D is a diagram for explaining a process of forming a lead-out portion.
[Fig. 7] Fig. 7 is a diagram showing an example of a nozzle arrangement in a winding apparatus configured to form windings of a fourth modification example of the first embodiment.
[Fig. 8] Fig. 8 is a diagram corresponding to Fig. 1, for explaining a notation method for magnetic pole teeth in a first modification example of the first embodiment.
[Fig. 9] Fig. 9A and Fig. 9B are diagrams respectively corresponding to Fig. 3A and Fig. 3B, schematically illustrating winding structures according to the first modification example of the first embodiment of the present invention.
[Fig. 10] Fig. 10A and Fig. 10B are diagrams respectively corresponding to Fig. 3A and Fig. 3B, schematically illustrating winding structures according to a second modification example of the first embodiment of the present invention.
[Fig. 11] Fig. 11 is a diagram for explaining a wiring operation to be performed on the windings shown in Fig. 10B to form the star connection illustrated in Fig. 4.
[Fig. 12] Fig. 12A and Fig. 12B are diagrams respectively corresponding to Fig. 3A and Fig. 3B, schematically illustrating winding structures according to a third modification example of the first embodiment of the present invention.
[Fig. 13] Fig. 13 is a diagram corresponding to Fig. 3B, schematically illustrating winding structures according to a fourth modification example of the first embodiment of the present invention.
[Fig. 14] Fig. 14A and Fig. 14B are diagrams respectively corresponding to Fig. 3A and Fig. 3B, schematically illustrating winding structures according to a second embodiment of the present invention.
[Fig. 15] Fig. 15 is a diagram for explaining a star connection structure that can be implemented using the windings shown in Fig. 14B.
[Fig. 16] Fig. 16 is a diagram for explaining a wiring operation to be performed on the windings shown in Fig. 14B to form the star connection shown in Fig. 15.
[Fig. 17] Fig. 17A and Fig. 17B are diagrams respectively corresponding to Fig. 3A and Fig. 3B, schematically illustrating winding structures according to a modification example of the second embodiment of the present invention.
[Fig. 18] Fig. 18 is a diagram for explaining a wiring operation to be performed on the windings shown in Fig. 17B to form the star connection shown in Fig. 15.
[Fig. 19] Fig. 19A and Fig. 19B are diagrams respectively corresponding to Fig. 3A and Fig. 3B, schematically illustrating winding structures according to a third embodiment of the present invention.
[Fig. 20] Fig. 20 is a diagram for explaining a star connection structure that can be implemented using the windings shown in Fig. 19B.
[Fig. 21] Fig. 21 is a diagram for explaining a wiring operation to be performed on the windings shown in Fig. 19B to form the star connection shown in Fig. 20.
[Fig. 22] Fig. 22A and Fig. 22B are diagrams respectively corresponding to Fig. 3A and Fig. 3B, schematically illustrating winding structures according to a modification example of the third embodiment of the present invention.
[Fig. 23] Fig. 23 is a diagram for explaining a wiring operation to be performed on the windings shown in Fig. 22B to form a star connection according to the modification example of the third embodiment.

### [Description of Embodiments]

Hereinafter embodiments of the present invention will be described with reference to the drawings.

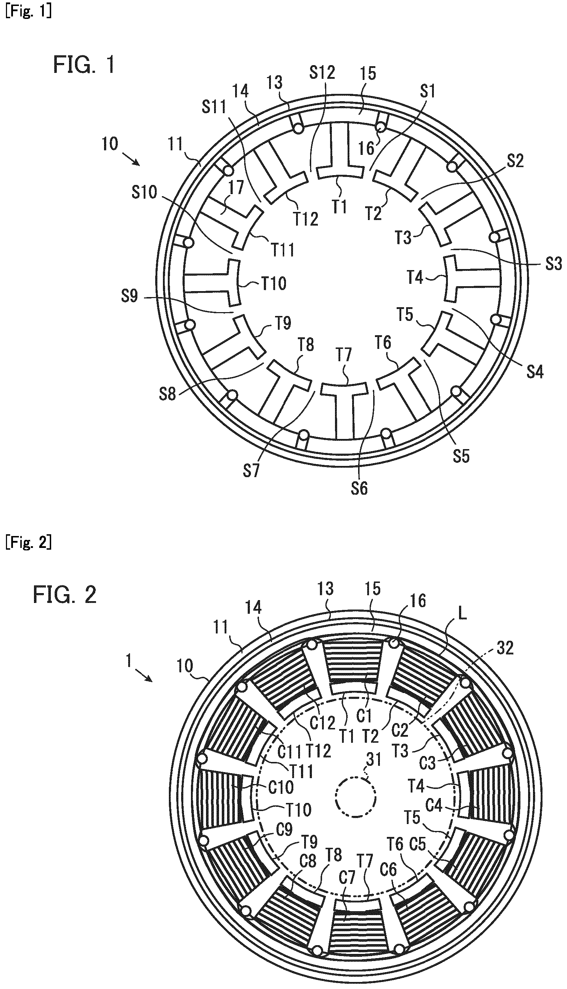

### [First Embodiment: Fig. 1 to Fig. 7]

First, a schematic configuration of a stator 1 according to a first embodiment of the present invention will be described with reference to Fig. 1 and Fig. 2.

Fig. 1 is a schematic plan view of a stator core 10, which constitutes the stator 1, as viewed from the side where a linking portion is to be formed. Fig. 2 is a schematic plan view similar to Fig. 1, showing the stator 1 formed by winding windings including three-phase coils around the stator core 10 shown in Fig. 1.

The stator core 10 has a generally hollow cylindrical shape, and in Fig. 1, an axial end face thereof (the second end face) appears.

As shown in Fig. 1, the stator core 10 includes twelve magnetic pole teeth (salient poles) T1 to T12 corresponding respectively to a first tooth to a twelfth tooth. These teeth are provided at equal angular intervals and project radially inward from an inner peripheral portion of a surrounding annular portion 11. The annular portion 11 and the magnetic pole teeth T1 to T12 are formed as a continuous, integral metal component. For convenience, the reference signs T1 to T12 are sequentially assigned clockwise to the magnetic pole teeth T, starting from the first magnetic pole tooth T1 used as a convenient reference to the twelfth magnetic pole tooth T12. The selection of which magnetic pole tooth is designated as T1 is arbitrary. When referring to a magnetic pole tooth generically, the reference sign "T" is used.

A slot S is formed between each pair of adjacent magnetic pole teeth T. Here, the slot formed between the magnetic pole tooth T1 and the magnetic pole tooth T2 is assigned the reference sign S1, and the subsequent slots are sequentially assigned the reference signs S2 to S12 in the clockwise direction. When referring to a slot generically, the reference sign "S" is used.

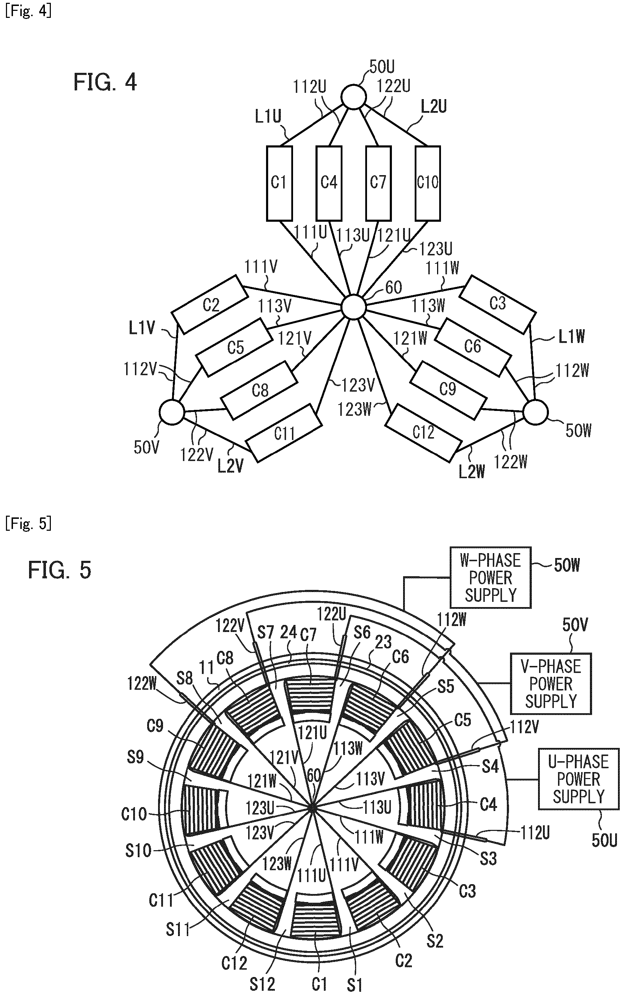

Insulating members 13 and 23 made of resin are provided on the surface appearing in Fig. 1 and the opposite surface, respectively, of the metal component including the annular portion 11 and the magnetic pole teeth T (for the opposite surface, see Fig. 5, Fig. 6A, Fig. 6C, and so on). In Fig. 1, except for the radial end portion of the annular portion 11, all visible areas are portions of the insulating member 13. Even in the areas indicated as magnetic pole teeth T, what appears in the drawing is the insulating member 13 covering the metal component constituting the magnetic pole teeth T.

The insulating member 13 includes an outer wall 14, a linking portion arrangement section 15, pins 16, and magnetic pole tooth covering portions 17 that cover the aforementioned magnetic pole teeth T.

The outer wall 14 is a wall rising in parallel with the central axis of the stator core 10 from the annular portion 11.

Twelve pins 16 are provided, each positioned substantially at the center between adjacent magnetic pole teeth T in the circumferential direction. Each pin 16 extends radially inward from the outer wall 14 by a length approximately corresponding to the width of the linking portion arrangement section 15, and then rises in parallel with the central axis.

The linking portion arrangement section 15 is a surface formed between the outer wall 14 and the pins 16, and is oriented perpendicular to the central axis.

The stator 1 according to the first embodiment of the present invention is formed, as shown in Fig. 2, by winding windings including three-phase coils around the stator core 10 shown in Fig. 1.

As shown in Fig. 2, coils C1 to C12 are wound with a conductor 43 (see Fig. 6C) around the respective magnetic pole teeth T1 to T12. A coil wound around a magnetic pole tooth TN is denoted by the reference sign CN (where N is a natural number from 1 to 12). As the conductor, a wire such as a copper wire covered with an insulating resin may be used, but the material is not limited thereto. Similar to the magnetic pole teeth T, when referring to a coil generically, the reference sign "C" is used.

The winding on the stator 1 also includes a linking portion L that connects a coil CX wound around a certain magnetic pole tooth TX with another coil CY wound around a different magnetic pole tooth TY (X and Y are different natural numbers from 1 to 12). The position of the linking portion L on the radially inner side of the stator core 10 is regulated by the pin(s) 16, and the linking portion L is arranged in the linking portion arrangement section 15 while being guided along one or more pins 16. The detailed structure and arrangement of the coils C and the linking portions L will be described later with reference to Figs. 3A and 3B.

In addition, on the rear surface (first end face) of the stator 1, which does not appear in Fig. 1 and Fig. 2, lead wires for connecting the coils C to power supplies of respective phases, and neutral lines for connecting to a neutral point, are provided. The arrangement of these lead wires and neutral lines will be described later with reference to Fig. 5 and other figures.

In the stator 1 of the first embodiment, the coils C wound around the respective magnetic pole teeth T can be connected in a four-parallel star connection structure as shown in Fig. 4. As illustrated by an imaginary line in Fig. 2, a rotor 32 provided with magnets can be disposed in the hollow portion of the stator 1 so as to be rotatable about a rotation shaft 31, thereby constituting an electrical rotating machine such as a motor. By connecting each lead wire to an output circuit instead of a power supply, the structure can also constitute an electrical rotating machine in the form of a generator.

Next, winding structure in the stator 1 will be described with reference to Fig. 3A and Fig. 3B.

Fig. 3A illustrates the winding structure of only the U-phase, and Fig. 3B illustrates the winding structure of all three phases. These drawings are schematic developed views in which twelve magnetic pole teeth (hereinafter also simply referred to as "tooth" or "teeth") T1 to T12, arranged in the circumferential direction, are shown as if viewed linearly from the center side of the stator core 10. The upper side in the figures corresponds to the second end face side, which appears in Fig. 1 and Fig. 2 and where the linking portions L are formed, while the lower side corresponds to the opposite, rear side, that is, the first end face side where lead wires and neutral lines are arranged.

Each conductor constituting the windings, such as the coils C, is illustrated as a line drawn around the magnetic pole teeth T1 to T12, with arrows indicating the winding direction. The conductors forming the U-phase winding are shown as solid lines, those of the V-phase as one-dot chain lines, and those of the W-phase as two-dot chain lines. Note that the winding direction does not necessarily correspond to the direction of current flow.

Among the wires drawn out from the slots S to the first end face side, portions denoted with the symbol "U," "V," or "W" indicate the portions of the conductor to be used as lead wires for connection to the power supplies of the corresponding phases. These portions are not necessarily the ends of the conductors. The other end portions of the wires drawn out from the slots S to the first end face side indicate the portions of the conductors to be used as neutral lines for connection to a neutral point.

On the second end face side of each magnetic pole tooth T, portions where lines are horizontally drawn represent portions of the conductors that form the linking portions L.

Lines drawn around the magnetic pole teeth T represent portions of the conductor that form coils C wound around the magnetic pole teeth T. For example, in the area around magnetic pole tooth T4 in Fig. 3A, due to limitations in the illustration, the lines may not completely encircle the magnetic pole tooth T. However, even in such cases, the depiction indicates that the coil C is wound around the magnetic pole tooth T with an appropriate number of turns.

Characteristics of the winding structure shown in Fig. 3A and Fig. 3B include the following (Feature1) to (Feature3). Further, this structure is suitable for forming a star connection in which, for each phase, four coils C, each wound around one magnetic pole tooth T, are connected in parallel.

(Feature 1): The windings of the respective three phases share a first common winding pattern of the conductor around the magnetic pole teeth T but differ from one another in their circumferential positions on the stator core 10 by one magnetic pole tooth T.

(Feature 2): The winding of each of the three phases includes a portion in which the conductor is drawn out from one slot SX and then returned to the same slot SX to form a lead-out portion. (X is any natural number from 1 to 12.)

(Feature 3): In the winding of each of the three phases, for at least one of the above-mentioned lead-out portion(s), the conductor on both sides of the lead-out portion (i.e., on the preceding and subsequent sides in the winding sequence) is fixed within the slot SX by the conductor wound around one of the magnetic pole teeth T forming the slot SX after the lead-out portion has been formed.

In the configuration shown in Fig. 3A, the winding of the U-phase is separated into a first portion 110U and a second portion 120U.

Of these, the first portion 110U starts from an end wire 111U at the winding start, is drawn into the slot S1 (first slot) adjacent to the magnetic pole tooth T1 from the first end face side, and is continuously wound in a counterclockwise direction (first direction) around the magnetic pole tooth T1 to form the coil C1. Although the length of the end wire 111U exposed outside the slot S1 is illustrated shorter than the height of the magnetic pole tooth T in the figures, the end wire 111U is used as a neutral line as will be described later, and is therefore actually formed to have a sufficient length for this purpose. Unless otherwise noted, the same applies to other end wires.

The first portion 110U is continuously drawn out to the second end face side from the slot S1 and led to the position of the slot S3 (second slot) adjacent to the magnetic pole tooth T4, as a linking portion L1U extending on the second end face side.

The first portion 110U is further continuously drawn into the second slot S3 from the second end face side, and then, without being wound around any magnetic pole tooth T, is drawn out to the first end face side by a predetermined length and drawn again into the slot S3 from the first end face side. The portion of the conductor extending from the slot S3 on the first end face side and re-entering the same slot forms a lead-out portion (first lead-out portion) 112U on the first end face side. Although the lead-out portion 112U is illustrated with a length shorter than the height of the magnetic pole tooth T in the figures, the lead-out portion 112U is used as a lead wire as will be described later, and is therefore actually formed to have a sufficient length for this purpose. Unless otherwise noted, the same applies to other lead-out portions.

The first portion 110U is further continuously wound in a clockwise direction (second direction) around the magnetic pole tooth T4 to form the coil C4, and then continuously drawn out to the first end face side from the slot S4 (third slot), which is adjacent to the magnetic pole tooth T4 and located on the side opposite to the slot S3 with respect to the magnetic pole tooth T4, thereby forming an end wire 113U at the winding end. The conductor on both sides of the lead-out portion 112U is pressed against the magnetic pole tooth T4 and fixed within the slot S3 by the conductor of the coil C4, which is wound over the portion after the lead-out portion 112U has been formed.

On the other hand, the second portion 120U starts from an end wire 121U at the winding start, is drawn into the slot S7 (fourth slot) adjacent to the magnetic pole tooth T7 from the first end face side, and is continuously wound in a counterclockwise direction around the magnetic pole tooth T7 to form the coil C7.

After the winding around the magnetic pole tooth T7 is completed, the second portion 120U is continuously drawn out from the first end face side of the slot S6 (fifth slot), which is located adjacent to the magnetic pole tooth T7 on the side opposite to the slot S7 with respect to the magnetic pole tooth T7, by a predetermined length, and is then drawn again into the slot S6 from the first end face side. A portion extending from the first end face side of the slot S6 and returning to the same slot S6 forms a lead-out portion (second lead-out portion) 122U on the first end face side.

The second portion 120U is then continuously drawn out to the second end face side from the slot S6 and led to the position of the slot S10 (sixth slot) adjacent to the magnetic pole tooth T10, as a linking portion L2U, on the second end face side.

The second portion 120U is further drawn into the slot S10 from the second end face side, wound in a clockwise direction around the magnetic pole tooth T10 to form the coil C10, and then continuously drawn out to the first end face side from the slot S10, thereby forming an end wire 123U at the winding end.

As shown in Fig. 3B, the V-phase winding is located at a position obtained by rotating the U-phase winding clockwise as viewed in Fig. 1 (i.e., to the right in Fig. 3B) by one magnetic pole tooth T, and has the same winding pattern as that of the U-phase winding. Similarly, the W-phase winding is located at a position obtained by further rotating the V-phase winding by one magnetic pole tooth T, and also has the same winding pattern as that of the U-phase winding and the V-phase winding.

In Fig. 3B, among the V-phase winding and the W-phase winding, portions corresponding to the respective portions of the U-phase winding, for which reference signs are assigned, are denoted by reference signs obtained by replacing the suffix "U" in the reference signs for the U-phase winding with "V" and "W," respectively. Hereinafter, when referring generically to components of each phase which have been designated with using reference signs including the suffix "U," "V," or "W", reference signs without the suffix "U," "V," or "W" will be used.

Next, a wiring process for manufacturing a motor using the stator 1 having the windings shown in Fig. 3B will be described with reference to Fig. 4 and Fig. 5.

Fig. 4 is a diagram for explaining a star connection structure that can be implemented using the windings shown in Fig. 3B. Fig. 5 is a diagram for explaining a wiring operation to be performed on the windings shown in Fig. 3B to form the star connection shown in Fig. 4. Fig. 5 shows from which positions on the stator core 10 the lead wires and neutral lines for the star connection shown in Fig. 4 are drawn out and how they are connected. In Fig. 5, the surface of the stator core 10 opposite to the one shown in Fig. 1 and Fig. 2 is illustrated. Therefore, the vertical positions of each coil C in the drawing are inverted compared to those in Fig. 2. The insulating member 23 shown in Fig. 5 includes an outer wall 24 located at a position corresponding to the outer wall 14. A magnetic pole tooth covering portion 27 that covers the magnetic pole teeth T, similar to the magnetic pole tooth covering portion 17, is also provided (see also Fig. 6C).

In Fig. 5, the neutral lines for connection to the neutral point 60 are illustrated as extending toward the center of the stator core 10, and the lead wires for connection to the power supplies 50 of the respective phases (when referring generically to the power supplies of the three phases without distinction, the reference sign "50" is used) are illustrated as extending radially. This manner of illustration is adopted to clearly show the positions from which each wire is drawn out from the stator core 10. There is no need to route the wires in the directions shown in the figure after being drawn out. Each wire may be routed arbitrarily, as long as the connection topology is maintained, and may be bundled or fixed using connectors or holders as appropriate.

Additionally, in Fig. 5, arcuate wires are depicted between the lead wires such as the lead-out portions 112 and the power supplies 50. However, these arcuate wires are also illustrated for the purpose of clearly showing the connection topology between the lead wires and the power supplies 50, and are not essential. The lead wires may be directly connected to the power supplies 50.

When manufacturing a motor using the stator 1 shown in Fig. 3B, it is assumed that a star connection will be formed as shown in Fig. 4, in which, for each phase, four coils wound around respective magnetic pole teeth T are connected in parallel.

For the U-phase, the lead-out portion 112U is connected to the U-phase power supply 50U, and the end wires 111U and 113U are connected to the neutral point 60. This allows the coils C1 and C4 to be connected in parallel. That is, the lead-out portion 112U can be used as a lead wire for connecting the two coils C1 and C4 to a common power supply, and the end wires 111U and 113U can be used as neutral lines.

In this case, the winding direction of the coil C1, which is located upstream of the lead-out portion 112U in the winding sequence, is opposite to the connection direction as viewed from the lead-out portion 112U. On the other hand, the winding direction of the coil C4, which is located downstream of the lead-out portion 112U, coincides with the connection direction as viewed from the lead-out portion 112U. Accordingly, by winding the coils C1 and C4 in opposite directions, current can flow in the same direction (clockwise when viewed from the center of the stator core 10) through both coils during energization.

As shown in Fig. 4, the wiring between the U-phase power supply 50U and the coil C1 includes not only the lead-out portion 112U but also the linking portion L1U.

Furthermore, if the conductor is bent at the turning point of the lead-out portion 112U so that the outgoing and returning conductors are folded together in close proximity, the entire lead-out portion 112U can be easily inserted into an insulating tube from the turning point. This allows the lead wire to be insulated almost entirely up to the vicinity of the stator core 10 with simple work.

A substantially similar relationship exists among the lead-out portion 122U, the end wires 121U and 123U, the coils C7 and C10, and the linking portion L2U. However, the linking portion L2U is included, together with the lead-out portion 122U, in the wiring between the U-phase power supply 50U and the coil C10. This is because, in order to place the lead-out portions 112U and 122U as close to each other as possible, the lead-out portion 112U in the first portion 110U is arranged on the right side in Fig. 3A, while the lead-out portion 122U in the second portion 120U is arranged on the left side in Fig. 3B.

By collectively connecting the lead-out portions 112U and 122U to the U-phase power supply 50U, and collectively connecting the end wires 111U, 113U, 121U, and 123U to the neutral point 60, the coils C1, C4, C7, and C10 can be connected in parallel for the U-phase.

Similarly, for the V-phase, the coils C2, C5, C8, and C11 can be connected in parallel by a corresponding connection. For the W-phase as well, the coils C3, C6, C9, and C12 can be connected in parallel by a corresponding connection.

For connection to the power supply 50, the two lead-out portions 112 and 122 for each phase may be collectively connected to the corresponding phase power supply 50. This collective connection point corresponds to a lead section for connection to the power supply 50. The two lead-out portions 112 and 122 may be connected to a common connector to form the lead section. For the neutral point, all of the end wires **111,** 113, 121, and 123 for the three phases may be collectively connected to a common neutral point 60.

As can be seen from Fig. 5, one neutral line is drawn out from each of all the slots S and arranged around the entire circumference of the stator core 10.

In contrast, regarding the lead wires, the wires from the first portions 110 and the second portions 120 of all phases, are drawn out only from six circumferentially consecutive slots S (slots S3 to S8) on the upper side of the figure. Accordingly, when performing an operation to collectively handle the lead wires for each phase, it is only necessary to reach toward only approximately half of the circumference of the stator core 10 to grasp the lead wires. This improves work efficiency, particularly in manual wiring, compared to a case in which the lead wires are evenly distributed over the entire circumference. This effect can be achieved by the above-described (Feature1) and (Feature2).

In addition, since each lead-out portion functions as two lead wires already grouped together, four coils C can be connected in parallel to the power supply 50 simply by bundling the two lead-out portions 112 and 122, thereby further improving work efficiency.

Furthermore, as shown in Fig. 3A and Fig. 3B, regarding the lead-out portion 112, among the lead-out portions 112 and 122 which serve as the lead wires, the lead-out portion 112 is formed first, and then the coil C is wound over it. As a result, both sides of the lead-out portion 112 are pressed by the coil C within the slot S, whereby the lead-out portion 112 is fixed onto the stator core 10. This prevents movement of the wire near the slot outlet during the wiring process and facilitates wire handling. Thus, the stator 1 having the above-described winding structure also contributes to improved work efficiency in wiring from this perspective. This point corresponds to the above-described (Feature3).

Such improvements in work efficiency contribute to enhanced manufacturing efficiency of electrical rotating machines such as motors.

In the configuration shown in Fig. 3A and Fig. 3B, the lead-out portion 122 is formed after the coil C is wound, and therefore cannot be fixed in the same manner. However, this is because priority has been given to improving work efficiency by collecting all of the lead-out portions 112 and 122 at circumferentially proximate positions on the stator core 10.

Next, an embodiment of a winding method for forming windings having the above-described structure will be described with reference to Fig. 6A through Fig. 6D.

Fig. 6A is a diagram showing a nozzle arrangement in a winding apparatus for implementing the winding method. Fig. 6B is a diagram showing a path of relative movement between the nozzle and the magnetic pole teeth T when winding a wire around a magnetic pole tooth T. Fig. 6C is a diagram showing a positional relationship between the nozzle and the pin during formation of the linking portion L. Fig. 6D is a diagram for explaining a process of forming the lead-out portion.

Since the windings of the first embodiment described above includes the above-described (Feature1), it has a configuration in which, as viewed over all three phases, two sets of three portions are provided, each portion in the same set having a common winding pattern of the conductor around the magnetic pole teeth T but differing in circumferential position on the stator core 10.

Accordingly, by synchronously moving three nozzles that feed the conductors, relative to the stator core 10, the windings of the three phases can be wound simultaneously. However, since the first portion 110 and the second portion 120 have partially different winding patterns, they are wound separately.

In order to wind the three phases simultaneously, for example, as shown in Fig. 6A, it is conceivable to use a winding apparatus in which three nozzles 41U, 41V, and 41W are fixed to a common nozzle holding unit 40, and each of the nozzles 41U, 41V, and 41W is configured to feed a conductor 43 of a wire. Each of the nozzles 41U, 41V, and 41W includes an advancing and retracting mechanism 41Ua, 41Va, and 41Wa housed in the nozzle holding unit 40 and is configured to advance and retract in the radial direction of the stator core 10 in synchronization with one another. Further, by rotating or translating at least one of the nozzle holding unit 40 and the stator core 10 to be wound, the nozzles 41U, 41V, and 41W can be synchronously moved relative to the stator core 10 in the circumferential direction (direction X in Fig. 6A) and the axial direction (direction Z in Fig. 6B) of the stator core 10.

In the following description, the winding process will be described as being performed by moving the nozzles 41U, 41V, and 41W. However, substantially the same winding can be achieved by moving only the stator core 10, or by moving both the nozzles 41U, 41V, and 41W and the stator core 10.

Unless otherwise specified, the terms "circumferential direction," "axial direction," and "radial direction" hereinafter refer to directions with respect to the stator core 10 to be wound.

The nozzles 41U, 41V, and 41W are used for winding the winding of the U-phase, V-phase, and W-phase, respectively, and their circumferential positions differ from one another by one magnetic pole tooth T. This corresponds to the difference in the circumferential positions of the wirings of the respective phases.

By feeding the conductor 43 from the three nozzles 41U, 41V, and 41W, respectively, and moving the nozzles 41U, 41V, and 41W relative to the stator core 10 so as to revolve around the magnetic pole teeth T, as shown in Fig. 6B, the coils C can be wound around the magnetic pole teeth T.

Fig. 6B illustrates an example in which winding is performed on the magnetic pole tooth T1 using the nozzle 41U. In this case, assuming that the winding starts from the slot S1 side, the nozzle 41U is positioned at a radial location corresponding to the position of the turn to be formed, and then translated in the axial direction to be inserted into the slot S1. After passing through the slot S1, the nozzle 41U is rotated in the circumferential direction to the position of the slot S12 which is located on the opposite side to the slot S1 with respect to the magnetic pole tooth T1. Thereafter, the nozzle 41U is translated in the axial direction, thereby being inserted into the slot S12 and passed therethrough, and then rotated back in the circumferential direction to the position of the slot S1. Through this sequence, one turn of the winding can be formed. By repeating this sequence while appropriately adjusting the radial position of the nozzle 41U, the coil C1 having a desired number of turns can be wound around the magnetic pole tooth T1. Winding operations on other magnetic pole teeth T using the other nozzles 41V and 41W can be performed in the same manner.

Fig. 6C is a schematic diagram showing only one circumferential side of a cross section of the stator core 10 taken along a plane passing through the rotation axis. In the figure, the lower side corresponds to the linking portion forming side (second end face side).

When forming a linking portion L for connection to another magnetic pole tooth T after winding around one magnetic pole tooth T is completed, the nozzle 41 is positioned on the linking portion forming side (second end face side), and is moved to an axial position where the nozzle 41 does not interfere with the pin 16 and a radial position that allows the fed conductor 43 to be placed radially outside the pin 16, as shown in Fig. 6C. In this state, by rotating the nozzle 41 in the circumferential direction, the conductor 43 can be guided along the pin(s) 16 to form the linking portion L. Once the nozzle 41 reaches the position of the next magnetic pole tooth T to be wound, the nozzle 41 may be moved to a position suitable for winding shown in Fig. 6B.

Note that insulation between different linking portions L may be enhanced, for example, by varying the axial positions of the linking portions L for each wire.

Fig. 6D illustrates a procedure for forming the lead-out portion 112U at the position of the slot S3, taking the first portion 110U of the U-phase as an example.

In this case, after the nozzle 41U is drawn out to the first end face side of the slot S3, the nozzle 41U is further moved in the axial direction by a predetermined distance (a sufficient length for use as a lead wire as described above) while feeding the conductor 43. Thereafter, the conductor 43 is held by a conductor holding unit 44 at a position where the conductor 43 is to be bent back, and the nozzle 41U is moved in the axial direction along a path reversed from the previous movement and is re-inserted into the same slot S3. In this manner, the lead-out portion 112 of the conductor 43 can be formed.

The conductor holding unit 44 may be of a type capable of gripping the conductor 43, like a clip, or may be of a type on which the conductor 43 can be hooked, like a pin or hook. The conductor holding unit 44 is not necessarily required to be movable. However, it is preferable that, after the conductor holding unit 44 holds the conductor 43, the already-drawn conductor 43 is slightly moved, as indicated by arrow 44a, to prevent interference between the nozzle 41U or the conductor 43 being fed therefrom and the already-drawn conductor 43, along the return path of the nozzle 41U. Note that the movement path of the nozzle 41U outside the slot S is not necessarily required to be linear. Further, the movement path does is not necessarily required to exactly coincide with the axial direction, either. When the movement path of the nozzle 41U is not linear, interference among the conductors 43 can be avoided by adjusting the movement path of the nozzle 41U without providing a movement mechanism to move the conductor holding unit 44.

Lead-out portions can be formed in other locations in the same manner. When winding is performed simultaneously using the three nozzles 41, the lead-out portions are also formed simultaneously at three locations. However, operations other than those of the nozzles 41U, 41V, and 41W and the stator core 10, for example, the operation timing of the conductor holding unit 44, is not necessarily required to be synchronized across all three locations. The amount of movement, as indicated by arrow 44a, is not necessarily required to be the same, and the movement directions are not necessarily required to be symmetrical.

As described above, by using a winding apparatus equipped with three nozzles 41U, 41V, and 41W that can be driven in synchronization, and by feeding conductors 43 which are wire materials from the tips of the nozzles 41U, 41V, and 41W, respectively, and combining the formation of the coils C, the linking portions L, and the lead-out portions 112 and 122 as described with reference to Fig. 6B to Fig. 6D, the windings shown in Fig. 3A and Fig. 3B can be formed through relative movement of the nozzles 41U, 41V, and 41W with respect to the stator core 10 such that the winding proceeds in the order illustrated in Fig. 3A and Fig. 3B. However, the winding may also be performed in the reverse order.

With such a winding method, the winding can be completed in approximately one-third of the time required to wind one conductor at a time sequentially, thereby significantly improving the manufacturing efficiency of the stator 1.

It is assumed that the first portion 110 and the second portion 120 of each phase are wound successively. However, this is not essential. It is not precluded that some other process is performed between the winding of one portion and the other. Moreover, either the first portion 110 or the second portion 120 may be wound first.

From the viewpoint of improving winding work efficiency, it is preferable that, for each phase, the nozzle 41 (first nozzle) used for winding the first portion 110 is the same as the nozzle 41 (second nozzle) used for winding the second portion 120. However, this is not essential. It is not precluded that the first portion 110 and the second portion 120 are wound using different nozzles. Furthermore, the first nozzle and the second nozzle may be fixed to different nozzle holding units, and after the winding of the first portion 110 is completed, the first nozzle may be moved away from the stator core 10, and the second nozzle may then be moved toward the stator core 10 instead of the first nozzle, to perform the winding of the second portion 120.

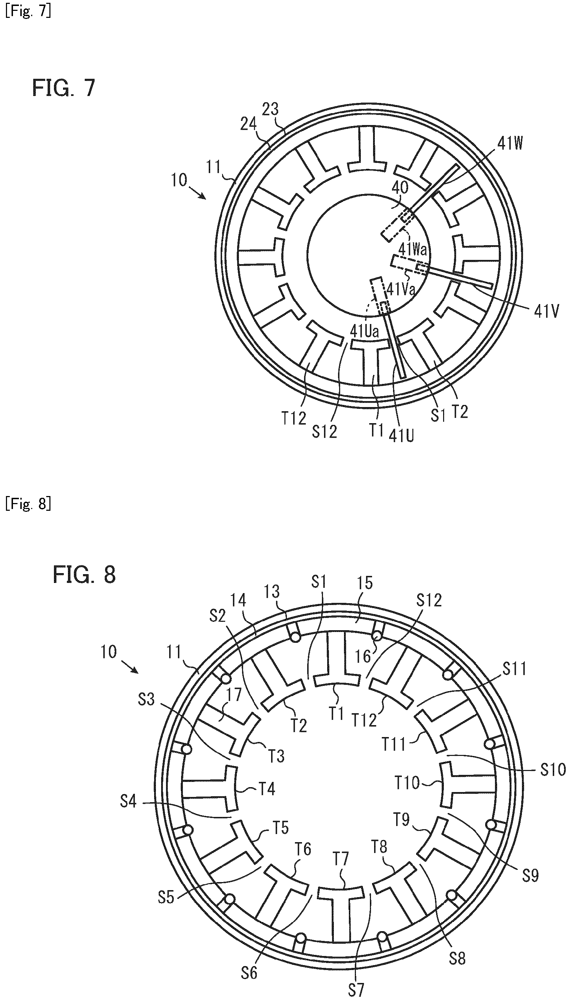

For comparison, Fig. 7 shows another example of the arrangement of the nozzles 41U, 41V, and 41W in a winding apparatus. The example of Fig. 7 differs from that of Fig. 6A only in the circumferential positional relationship among the nozzles 41U, 41V, and 41W, and the same reference signs are used for corresponding components as those in Fig. 6A.

In the example of Fig. 7, the nozzles 41U, 41V, and 41W are arranged at circumferential positions differing from one another by two magnetic pole teeth T.

The winding apparatus having the nozzle arrangement shown in Fig. 7 is suitable for forming a winding in which the windings of the three phases are respectively located at circumferential positions differing from one another by two magnetic pole teeth T, in contrast to the winding shown in Fig. 3B.

As can be seen by comparing Fig. 7 with Fig. 6A, the configuration shown in Fig. 7 provides more space for arranging the advancing and retracting mechanisms 41a than the configuration shown in Fig. 6A. This is because the advancing and retracting mechanisms 41a of adjacent nozzles 41U, 41V, and 41W are located further apart in the configuration of Fig. 7 than in that of Fig. 6A.

In Fig. 7, the radial lengths of the advancing and retracting mechanisms 41a and 42a are the same as those in Fig. 6A. However, it is also possible to adopt longer advancing and retracting mechanisms and thereby increase the radial range of movement of the nozzles 41 and 42.

Despite the above circumstances, the winding configuration shown in Fig. 3B was intentionally adopted such that the windings of the three phases differ from one another in their circumferential positions by one magnetic pole tooth T, in consideration of work efficiency in connecting the lead wires. This arrangement allows the lead wires of each phase to be drawn out from relatively closer positions, thereby improving work efficiency during the wiring of the lead wires.

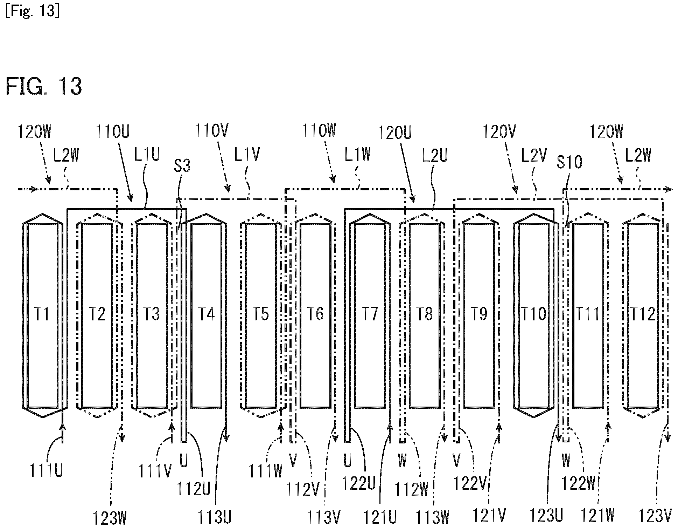

As will be described later with reference to Fig. 13, if the winding of Fig. 3B is modified so that the windings of the respective three phases differ in their circumferential positions by two magnetic pole teeth T, the lead wires of the three phases will be drawn out over a wider circumferential range of the stator core 10 compared to the case of Fig. 3B. As a result, it would be necessary to reach over a wider range around the stator core 10 to perform wiring to the power supplies 50, which would result in lower work efficiency compared to the arrangement described with reference to Fig. 5.

### [First Modification Example of the First Embodiment: Fig. 8 to Fig. 9B]

Next, a first modification example of the above-described first embodiment will be described with reference to Fig. 8 to Fig. 9A. The first modification example differs from the first embodiment only in that the winding proceeds in the direction opposite to that shown in Fig. 3A and Fig. 3B, as viewed in the circumferential direction of the stator core 10. Components that are the same as or correspond to those in the first embodiment are denoted by the same reference signs, and explanations of common parts are omitted as appropriate. The same applies to the following modification examples as well as to the second and subsequent embodiments.

Fig. 8 is a diagram corresponding to Fig. 1, for explaining a notation method for magnetic pole teeth in the first modification example.

In this first modification example, as shown in Fig. 8, the reference signs T1 to T12 are sequentially assigned counterclockwise to the magnetic pole teeth T, starting from the first magnetic pole tooth T1 used as a convenient reference to the twelfth magnetic pole tooth T12. This differs from the example shown in Fig. 1. The structure of the stator core 10 remains the same as that in the example of Fig. 1.

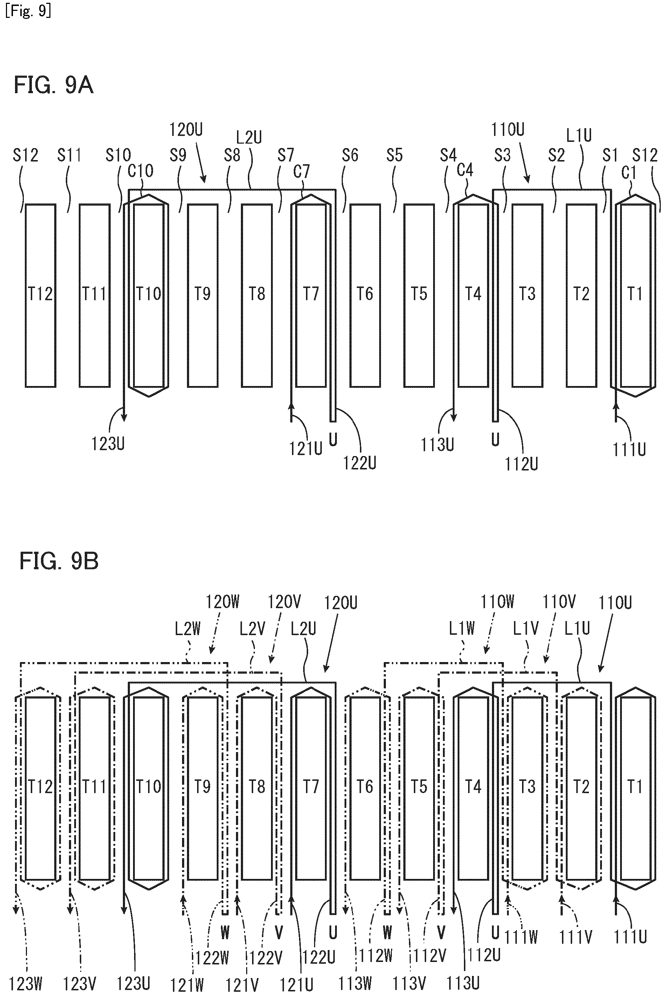

Fig. 9A and Fig. 9B respectively illustrate the winding structure of the stator 1 in the first modification example, in a manner similar to Fig. 3A and Fig. 3B.

In Fig. 9A and Fig. 9B, corresponding to the reversed order of assigning reference signs T1 to T12 to each magnetic pole tooth T compared to Fig. 3A and Fig. 3B, the magnetic pole teeth are arranged so that the numbers increase from right to left.

The slot S into which the winding is drawn, the magnetic pole tooth T around which the winding is wound, the slot S from which the winding is drawn out, and the magnetic pole teeth T between which the linking portion L is formed are the same as those in the first embodiment illustrated in Fig. 3A and Fig. 3B. However, since the order of assigning reference signs to the magnetic pole teeth T and slots S is reversed relative to Fig. 1, Fig. 9A and Fig. 9B illustrate a structure where, using the same reference signs as in Fig. 3A and Fig. 3B, the winding progression direction is reversed in the circumferential direction of the stator core 10, as compared to Fig. 3A and Fig. 3B.

However, the direction in which the conductor is wound around each magnetic pole tooth T is opposite to that in Fig. 3A and Fig. 3B. This corresponds to the reversal of the winding progression direction.

Specifically, in the first modification example, as illustrated in Fig. 9A, the first portion 110U starts from an end wire 111U at the winding start, is drawn into the slot S1 (first slot) from the first end face side, and is continuously wound in a clockwise direction (first direction) around the magnetic pole tooth T1 to form the coil C1. The first portion 110U is then continuously drawn out to the second end face side from the slot S1 and led to the position of the slot S3 (second slot) as a linking portion L1U extending on the second end face side, is further continuously drawn out to the first end face side to form a lead-out portion 112U on the first end face side of the slot S3, and is further continuously wound in a counterclockwise direction (second direction) around the magnetic pole tooth T4 to form the coil C4, and then continuously drawn out to the first end face side from the slot S4 (third slot), thereby forming an end wire 113U at the winding end.

On the other hand, the second portion 120U starts from an end wire 121U at the winding start, is drawn into the slot S7 (fourth slot) from the first end face side, and is continuously wound in a clockwise direction around the magnetic pole tooth T7 to form the coil C7.

After the winding around the magnetic pole tooth T7 is completed, the second portion 120U is continuously drawn out to the first end face side of the slot S6 (fifth slot) to form a lead-out portion 122U, and is then drawn out to the second end face side of the slot S6 and led to the position of the slot S10 (sixth slot) on the second end face side as a linking portion L2U.

The second portion 120U is further drawn into the slot S10 from the second end face side, wound in a counterclockwise direction around the magnetic pole tooth T10 to form the coil C10, and then drawn out to the first end face side from the slot S10, reaching an end wire 123U at the winding end.

Such winding structure also includes (Feature1) to (Feature3) described in the first embodiment and, as with the windings in the first embodiment, allows simultaneous winding of three phases. Furthermore, connection by star connection as in Fig. 4 is possible. However, the current flow direction of each coil C1 to C12 is opposite to that in the first embodiment and is counterclockwise as viewed from the center of the stator core 10. The positions from which the lead wires or lead-out portions are drawn correspond to a left-right reversal of Fig. 5. That is, the manner and circumferential range in which the lead wires or lead-out portions are drawn out from the stator core 10 are the same as in the windings of the first embodiment.

Therefore, the stator 1 of this first modification example and the winding method thereof can achieve the same effects as those of the configuration of the first embodiment described above.

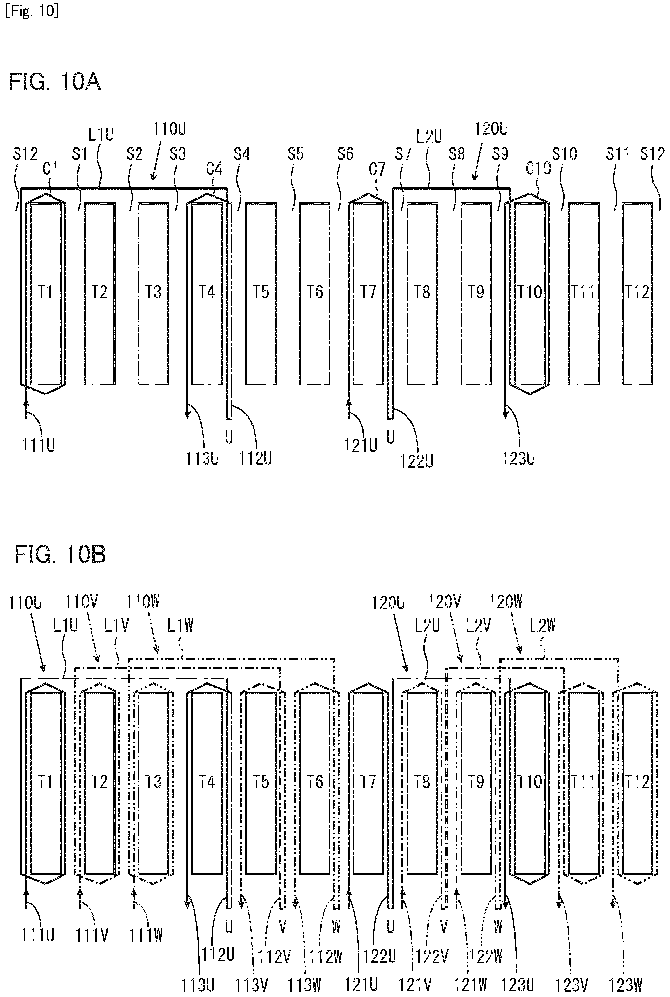

### [Second Modification Example of the First Embodiment: Fig. 10A to Fig. 11]

Next, a second modification example of the above-described first embodiment will be described with reference to Fig. 10A to Fig. 11. The second modification example differs from the first embodiment only in that the direction in which the conductor is wound around each magnetic pole tooth T is reversed, and accordingly, the positions of the slots through which the conductor passes are changed.

Fig. 10A and Fig. 10B respectively illustrate the winding structure of the stator 1 in the second modification example, in a manner similar to Fig. 3A and Fig. 3B.

In the second modification example, as illustrated in Fig. 10A, the first portion 110U of the U-phase winding starts from an end wire 111U at the winding start, is drawn into the slot S12 (first slot) adjacent to the magnetic pole tooth T1 from the first end face side, and is continuously wound in a clockwise direction (first direction) around the magnetic pole tooth T1 to form the coil C1.

The first portion 110U is then continuously drawn out to the second end face side from the slot S12 and led to the position of the slot S4 (second slot) adjacent to the magnetic pole tooth T4 on the second end face side, as a linking portion L1U.

The first portion 110U is further continuously drawn into the slot S4 from the second end face side, and without being wound around any magnetic pole tooth T, is drawn out to the first end face side by a predetermined length and drawn again into the slot S4 from the first end face side, thereby forming a lead-out portion 112U.

The first portion 110U is further continuously wound in a counterclockwise direction (second direction) around the magnetic pole tooth T4 to form the coil C4, and then continuously drawn out to the first end face side from the slot S3 (third slot), which is adjacent to the magnetic pole tooth T4 on the side opposite to the slot S4, thereby forming an end wire 113U at the winding end.

The second portion 120U is located at a position rotated by half the circumference from the first portion 110U with the same shape as the first portion 110U, as in the first embodiment.

On the other hand, the second portion 120U starts from an end wire 121U at the winding start, is drawn into the slot S6 (fourth slot) adjacent to the magnetic pole tooth T7 from the first end face side, and is then wound in a clockwise direction around the magnetic pole tooth T7 to form the coil C7.

After the winding around the magnetic pole tooth T7 is completed, the second portion 120U is continuously drawn out from the first end face side of the slot S7 (fifth slot), which is located adjacent to the magnetic pole tooth T7 on the side opposite to the slot S6, by a predetermined length, and is then drawn into the slot S7 again from the first end face side, thereby forming a lead-out portion 122U.

The second portion 120U is then continuously drawn out to the second end face side from the slot S7 and led to the position of the slot S9 (sixth slot) adjacent to the magnetic pole tooth T10 on the second end face side, as a linking portion L2U.

The second portion 120U is further continuously drawn into the slot S9 from the second end face side, wound in a counterclockwise direction around the magnetic pole tooth T10 to form the coil C10, and then continuously drawn out to the first end face side from the slot S9, reaching an end wire 123U at the winding end.

Such winding structure also includes (Feature1) to (Feature3) described in the first embodiment and, as with the windings in the first embodiment, allows simultaneous winding of three phases. Furthermore, connection by star connection as in Fig. 4 is possible. However, the current flow direction of each coil C1 to C12 is opposite to that in the first embodiment and is counterclockwise as viewed from the center of the stator core 10.

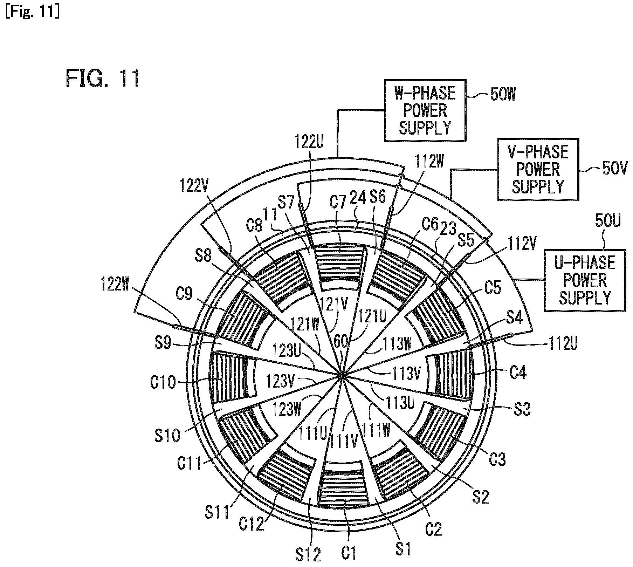

Fig. 11 illustrates the positions from which the lead wires and neutral lines are drawn and the assumed connection topology in the windings of the second modification example, in a manner similar to Fig. 5.

As can be seen from Fig. 11, the neutral lines are arranged around the entire circumference of the stator core 10, whereas, the wires from the first portions 110 and the second portions 120 of all phases are drawn out only from six circumferentially consecutive slots S (slots S4 to S9) on the upper side of the figure, as in the case of Fig. 5.

Therefore, the stator 1 of the second modification example and the winding method thereof can achieve the same effects as those of the configuration of the first embodiment described above.

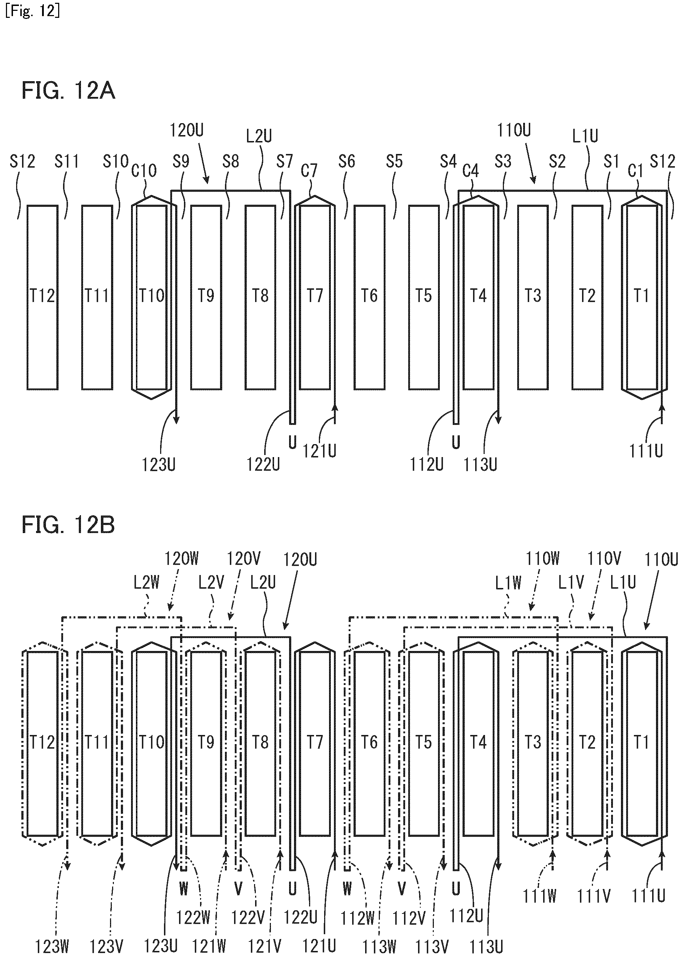

### [Third Modification Example of the First Embodiment: Fig. 12A and Fig. 12B]

Next, a third modification example of the above-described first embodiment will be described with reference to Fig. 12A and Fig. 12B. The third modification example differs from the second modification example of the first embodiment only in that the winding proceeds in the direction opposite to that shown in Fig. 10A and Fig. 10B, as viewed in the circumferential direction of the stator core 10. Then, the notation method of the magnetic pole teeth T follows that of the first modification example, as illustrated in Fig. 8.

Fig. 12A and Fig. 12B respectively illustrate the winding structure of the stator 1 in the third modification example, in a manner similar to Fig. 3A and Fig. 3B.

In the winding structure illustrated in Fig. 12A and Fig. 12B, the slot S into which the winding is drawn, the magnetic pole tooth T around which the winding is wound, the slot S from which the winding is drawn out, and the magnetic pole teeth T between which the linking portion L is formed are the same as those in the second embodiment illustrated in Fig. 11A and Fig. 11B. However, since the order of assigning reference signs to the magnetic pole teeth T and slots S is reversed relative to Fig. 1, Fig. 12A and Fig. 12B illustrate a structure where, using the same reference signs as in Fig. 10A and Fig. 10B, the winding progression direction is reversed in the circumferential direction of the stator core 10, as compared to Fig. 10A and Fig. 10B.

However, the direction in which the conductor is wound around each magnetic pole tooth T is opposite to that in Fig. 10A and Fig. 10B. This corresponds to the reversal of the winding progression direction.

Specifically, in the third modification example, as illustrated in Fig. 12A, the first portion 110U starts from an end wire 111U at the winding start, is drawn into the slot S12 (first slot) from the first end face side, and is continuously wound in a counterclockwise direction (first direction) around the magnetic pole tooth T1 to form the coil C1. The first portion 110U is then continuously drawn out to the second end face side from the slot S12 and led to the position of the slot S4 (second slot) as a linking portion L1U extending on the second end face side, is further continuously drawn out to the first end face side to form a lead-out portion 112U on the first end face side of the slot S4, and is further continuously wound in a clockwise direction (second direction) around the magnetic pole tooth T4 to form the coil C4, and then continuously drawn out to the first end face side from the slot S3 (third slot), thereby forming an end wire 113U at the winding end.

On the other hand, the second portion 120U starts from an end wire 121U at the winding start, is drawn into the slot S6 (fourth slot) from the first end face side, and is continuously wound in a counterclockwise direction around the magnetic pole tooth T7 to form the coil C7.

After the winding around the magnetic pole tooth T7 is completed, the second portion 120U is continuously drawn out to the first end face side of the slot S7 (fifth slot) to form a lead-out portion 122U, and is continuously drawn out to the second end face side of the slot S7 and led to the position of the slot S9 (sixth slot) as a linking portion L2U extending on the second end face side.

The second portion 120U is further continuously drawn into the slot S9 from the second end face side, wound in a clockwise direction around the magnetic pole tooth T10 to form the coil C10, and then continuously drawn out to the first end face side from the slot S9, reaching an end wire 123U at the winding end.

Such winding structure also includes (Feature1) to (Feature3) described in the first embodiment and, as with the windings in the first embodiment, allows simultaneous winding of three phases. Furthermore, connection by star connection as in Fig. 4 is possible. The current flow direction of each coil C1 to C12 is clockwise, the same as that in the first embodiment. The positions from which the lead wires or lead-out portions are drawn correspond to a left-right reversal of Fig. 11. That is, the manner and circumferential range in which the lead wires or lead-out portions are drawn out from the stator core 10 are the same as those in the windings of the second modification example.

Therefore, the stator 1 of this third modification example and the winding method thereof can achieve the same effects as those of the configuration of the first embodiment and each modification example described above.

### [Fourth Modification Example of the First Embodiment: Fig. 13]

Next, a fourth modification example of the above- described first embodiment will be described with reference to Fig. 13. The fourth modification example differs from the first embodiment shown in Fig. 3A and Fig. 3B only in that the windings of the three phases differ from one another in their circumferential positions on the stator core 10 by two magnetic pole teeth T.

The windings of the fourth modification example includes the above-described (Feature2) and (Feature3) but does not include (Feature1).

Fig. 13 illustrates the winding structure of the stator 1 in the fourth modification example, in a manner similar to Fig. 3B.

In the configuration of Fig. 13, the end wire 111U at the winding start of the first portion 110U of the U-phase is drawn into the slot S1 and initially wound around the magnetic pole tooth T1, whereas the end wire 111V of the first portion 110V of the V-phase is drawn into the slot S3 located two magnetic pole teeth T apart from the slot S1, and initially wound around the magnetic pole tooth T3. Similarly, the end wire 111W of the first portion 110W of the W-phase is drawn into the slot S5 located two magnetic pole teeth T further apart from the slot S3, and initially wound around the magnetic pole tooth T5.

In the second portion 120U of the U-phase, the end wire 121U at the winding start is drawn into the slot S7 and initially wound around the magnetic pole tooth T7, whereas in the second portion 120V of the V-phase, the end wire 121V is drawn into the slot S9 located two magnetic pole teeth T apart from the slot S7, and initially wound around the magnetic pole tooth T9. Similarly, in the second portion 120W of the W-phase, the end wire 121W is drawn into the slot S11 located two magnetic pole teeth T further apart from the slot S9, and initially wound around the magnetic pole tooth T11.

The structure of the first portion 110U and the second portion 120U is the same as that illustrated in Fig. 3A.

As described with reference to Fig. 7, such an arrangement allows ample space to be secured for arranging the nozzles 41U, 41V, and 41W and the advancing and retracting mechanisms 41Ua, 41Va, and 41Wa thereof, which are used to simultaneously wind the three phases.

However, as can be seen from Fig. 13, the range from which the lead-out portions 112 and 122, which serve as lead wires, are drawn out becomes eight slots (slots S3 to S10), which is wider than the six slots shown in Fig. 5. As a result, the wiring work efficiency is lower compared to the configuration shown in Fig. 3B.

As described above, the configuration shown in Fig. 3B and the configuration shown in Fig. 13 each have respective advantages and disadvantages depending on the perspective. Therefore, which configuration is preferably adopted may vary depending on the design concept or the emphasized factors of the winding apparatus, the stator 1, or the electrical rotating machine including the stator 1.

It should be noted that not only the first embodiment but also the first to third modification examples may be subjected to a modification similar to that of the fourth modification example.

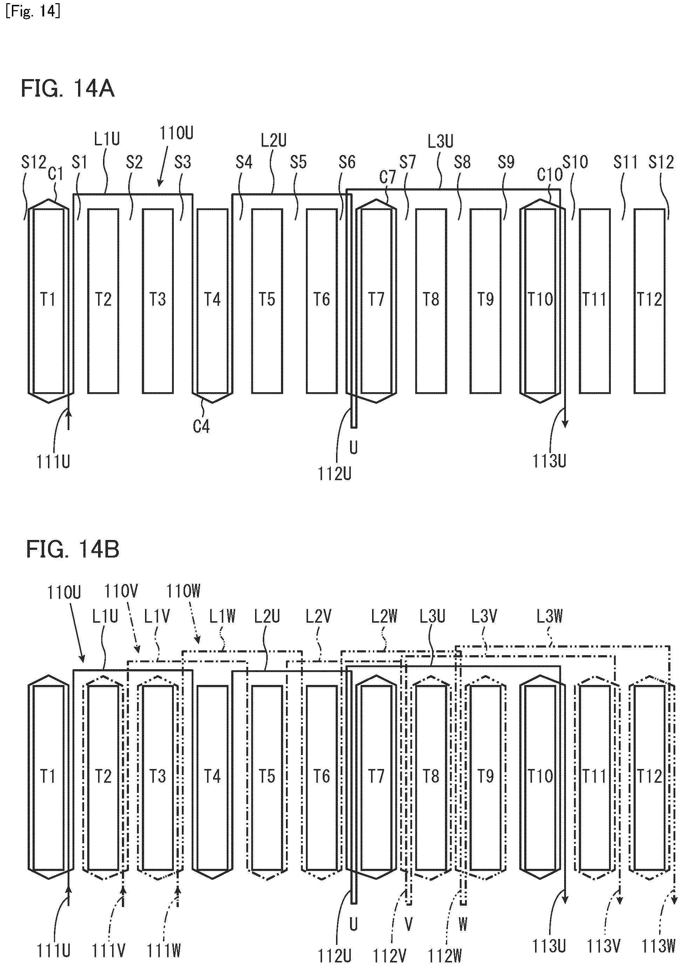

### [Second Embodiment: Fig. 14A to Fig. 16]

Next, a second embodiment of the present invention will be described with reference to Fig. 14A to Fig. 16.

The second embodiment differs from the first embodiment in that the winding structure of the stator 1 assumes a star connection in which, for each phase, two coils C, each wound in series around two magnetic pole teeth T, are connected in parallel. Other aspects, including the configuration of the stator core 10, are the same as those of the first embodiment.

Fig. 14A and Fig. 14B respectively illustrate the winding structure of the stator 1 in the second embodiment, in a manner similar to Fig. 3A and Fig. 3B. The winding structure of the second embodiment also includes (Feature1) to (Feature3) described in the first embodiment, and, as with the windings in the first embodiment, allows simultaneous winding of three phases.

In the windings of the second embodiment, the winding of each phase is not separated into multiple portions as in the first embodiment but is formed with a single conductor. This winding of one phase is denoted by a reference sign such as "110U."

In the windings of the second embodiment, as illustrated in Fig. 14A, the winding 110U of the U-phase starts from an end wire 111U at the winding start, is drawn into the slot S1 (first slot) adjacent to the magnetic pole tooth T1 from the first end face side, and is continuously wound around the magnetic pole tooth T1 in a counterclockwise direction (first direction) to form the coil C1.

The winding 110U is continuously drawn out to the second end face side from the slot S1 and led to the position of the slot S3 (second slot) adjacent to the magnetic pole tooth T4 as a linking portion L1U extending on the second end face side.

The winding 110U is further continuously drawn into the slot S3 from the second end face side, wound in a counterclockwise direction around the magnetic pole tooth T4 to form the coil C4. After the winding around the magnetic pole tooth T4 is completed, the winding 110U is continuously drawn out to the second end face side from the slot S4 (third slot), which is adjacent to the magnetic pole tooth T4 on the side opposite to the slot S3 with respect to the magnetic pole tooth T4, and is led to the position of the slot S6 (fourth slot) adjacent to the magnetic pole tooth T7 as a linking portion L2U extending on the second end face side.

The winding 110U is further continuously drawn into the slot S6 from the second end face side, and without being wound around any magnetic pole tooth, the winding 110U is drawn out from the first end face side by a predetermined length and drawn again into the slot S6 from the first end face side, thereby forming a lead-out portion 112U.

The winding 110U is further continuously wound in a clockwise direction (second direction) around the magnetic pole tooth T7 to form the coil C7. The conductor on both sides of the lead-out portion 112U is pressed against the magnetic pole tooth T7 and fixed within the slot S6 by the conductor of the coil C7, which is wound over the portion after the lead-out portion 112U has been formed.

After the winding around the magnetic pole tooth T7 is completed, the winding 110U is continuously drawn out to the second end face side from the slot S6 and led to the position of the slot S10 (fifth slot) adjacent to the magnetic pole tooth T10 as a linking portion L2U extending on the second end face side.

The winding 110U is further continuously drawn into the slot S10 from the second end face side, wound in a clockwise direction around the magnetic pole tooth T10 to form the coil C10, and then continuously drawn out to the first end face side from the slot S10, reaching an end wire 113U at the winding end.

Further, as illustrated in Fig. 14B, the windings 110V and 110W of the V-phase and W-phase are located at positions obtained by rotating the above-described winding 110 U of the U-phase clockwise as viewed in Fig. 1 (rightward in Fig. 14B) by one and two magnetic pole teeth T, respectively, and have the same winding shape as that of the winding 110U of the U-phase.

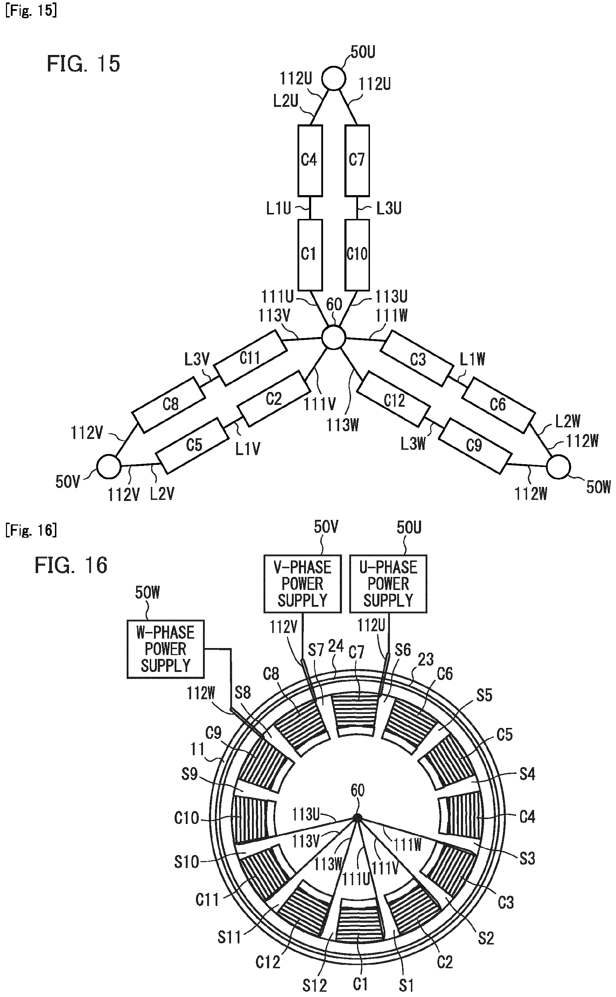

Fig. 15 is a diagram corresponding to Fig. 4, for explaining a star connection structure that can be implemented using the windings shown in Fig. 14B. Fig. 16 is a diagram corresponding to Fig. 5, for explaining a wiring operation to be performed on the windings shown in Fig. 14B to form the star connection shown in Fig. 15.

When manufacturing a motor using the stator 1 shown in Fig. 14B, it is assumed that a star connection will be formed as shown in Fig. 15, in which, for each phase, two circuits, each including two coils C wound around respective magnetic pole teeth T and connected in series, are connected in parallel.

For the U-phase, by connecting the lead-out portion 112U to the U-phase power supply 50U, and connecting the end wires 111U and 113U to the neutral point 60, the coils C4 and C1 can be connected in series, the coils C7 and C10 can be connected in series, and further these two series circuits can be connected in parallel. The direction of current flow is the same in all the coils C, namely, clockwise when viewed from the center of the stator core 10.

That is, the lead-out portion 112U can be used as a lead wire common to two series circuits, and the end wires 113U and 113U can be used as neutral lines. It should be noted that the wiring between the U-phase power supply 50U and the coil C4 includes not only the lead-out portion 112U but also the linking portion L2U. The linking portion L1U serves as a connection wire between the coils C1 and C4, while the linking portion L3U serves as a connection wire between the coils C7 and C10.

For the V-phase as well, by a corresponding connection, a first circuit in which the coils C5 and C2 are connected in series and a second circuit in which the coils C8 and C11 are connected in series can be connected in parallel. Similarly, for the W-phase, a first circuit in which the coils C6 and C3 are connected in series and a second circuit in which the coils C9 and C12 are connected in series can be connected in parallel by a corresponding connection.

For connection to the power supply 50, one lead-out portion 112 for each phase may be connected to the power supply 50 of the corresponding phase. If the conductor forming the lead-out portion 112 is bent at an appropriate turning point so that the outgoing and returning conductors are folded together in close proximity, the entire lead-out portion 112U can be easily inserted into an insulating tube from the turning point. This allows the lead wire to be insulated almost entirely up to the vicinity of the stator core 10 with simple work.

Furthermore, if the turning point is used as a lead section for connection to the U-phase power supply 50U, it can be considered that the lead wires for the two series circuits to be connected in parallel are already combined as a single lead section at the time the winding is completed. Accordingly, there is no need to perform an operation for bundling multiple wires, which greatly facilitates the wiring process.

Alternatively, a lead section may be formed by connecting an appropriate part of the lead-out portion 112 to a connector. As for the neutral point, all six end wires of the three phases may be connected to a common neutral point 60.

As can be seen from Fig. 16, the lead wires are drawn out only from three circumferentially consecutive slots S (slots S6 to S8) on the upper side of the figure. Accordingly, in order to connect the lead wires of the three phases to the corresponding power supplies 50 respectively, it is sufficient to reach toward only approximately one-sixth of the circumference of the stator core 10, thereby achieving even higher wiring work efficiency than in the first embodiment. As described above, in the second embodiment, high work efficiency can be achieved also because the task of bundling lead wires for each phase is not required. These effects are achieved by (Feature1) and (Feature2) described above.

The neutral lines are also drawn out only from six circumferentially consecutive slots S (slots S10 to S3) located on the lower side of the figure. Accordingly, in order to connect the neutral lines of the three phases to the neutral point 60, it is sufficient to reach toward only slightly less than half of the circumference of the stator core 10, and high work efficiency in wiring can be achieved in this respect as well.

As can be seen from Fig. 14A and Fig. 14B, the lead-out portion 112, which serves as a lead wire, is fixed within the slot S onto the stator core 10 by the coil C wound over both sides of the lead-out portion 112, as in the case of the first embodiment. Accordingly, as in the first embodiment, the wiring work is facilitated due to ease of wire handling during the wiring process. This corresponds to (Feature3) described above.

In addition, the end wire 111 is also fixed within the slot S in the same manner and similarly allows for easy handling.

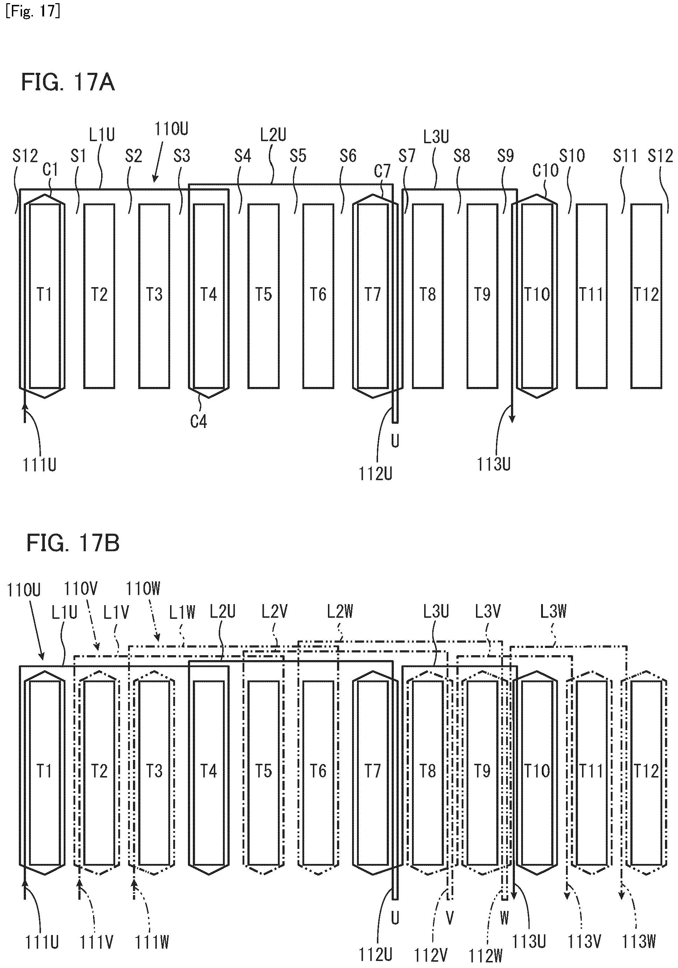

### [Modification Example of the Second Embodiment: Fig. 17A to Fig. 18]

Next, a modification example of the second embodiment will be described with reference to Fig. 17A to Fig. 18. This modification example differs from the second embodiment only in that the direction in which the conductor is wound around each magnetic pole tooth T is reversed, and accordingly, the positions of the slots S through which the conductor passes are changed.

Fig. 17A and Fig. 17B respectively illustrate the winding structure of the stator 1 in this modification example, in a manner similar to Fig. 3A and Fig. 3B.

In this modification example, as shown in Fig. 17A, the winding 110U of the U-phase winding starts from an end wire 111U at the winding start, is drawn into the slot S12 (first slot) adjacent to the magnetic pole tooth T1 from the first end face side, and is continuously wound in a clockwise direction (first direction) around the magnetic pole tooth T1 to form the coil C1.

The winding 110U is then continuously drawn out to the second end face side from the slot S12, and led to the position of the slot S4 (second slot) adjacent to the magnetic pole tooth T4, as a linking portion L1U extending on the second end face side.

The winding 110U is further continuously drawn into the slot S4 from the second end face side, is continuously wound in a clockwise direction around the magnetic pole tooth T4 to form the coil C4. After the winding around the magnetic pole tooth T4 is completed, the winding 110U is continuously drawn out to the second end face side from the slot S3 (third slot) which is adjacent to the magnetic pole tooth T4 on the side opposite to the slot S4, and led to the position of the slot S7 (fourth slot) adjacent to the magnetic pole tooth T7 as a linking portion L2U extending on the second end face side.

The winding 110U is further continuously drawn into the slot S7 from the second end face side, and without being wound around any magnetic pole tooth, the winding 110U is drawn out from the first end face side by a predetermined length and drawn again into the slot S7 from the first end face side, thereby forming a lead-out portion 112U.

The winding 110U is further continuously wound in a counterclockwise direction (second direction) around the magnetic pole tooth T7 to form the coil C7. The conductor on both sides of the lead-out portion 112U is pressed against the magnetic pole tooth T7 and fixed within the slot S7 by the conductor of the coil C7, which is wound over the portion after the lead-out portion 112U has been formed.

After the winding around the magnetic pole tooth T7 is completed, the winding 110U is continuously drawn out to the second end face side from the slot S7 and led to the position of the slot S9 (fifth slot) adjacent to the magnetic pole tooth T10 as a linking portion L2U extending on the second end face side.

The winding 110U is further continuously drawn into the slot S9 from the second end face side, wound in a clockwise direction around the magnetic pole tooth T10 to form the coil C10, and then continuously drawn out to the first end face side from the slot S9, reaching an end wire 113U at the winding end.

Such winding structure also includes (Feature1) to (Feature3) described above, and, as in the cases of the windings in the first and second embodiments, allows simultaneous winding of three phases. In addition, connection by a star connection as shown in Fig. 15 is possible. However, the current flow direction of each coil C1 to C12 is opposite to that in the second embodiment and is counterclockwise as viewed from the center of the stator core 10.

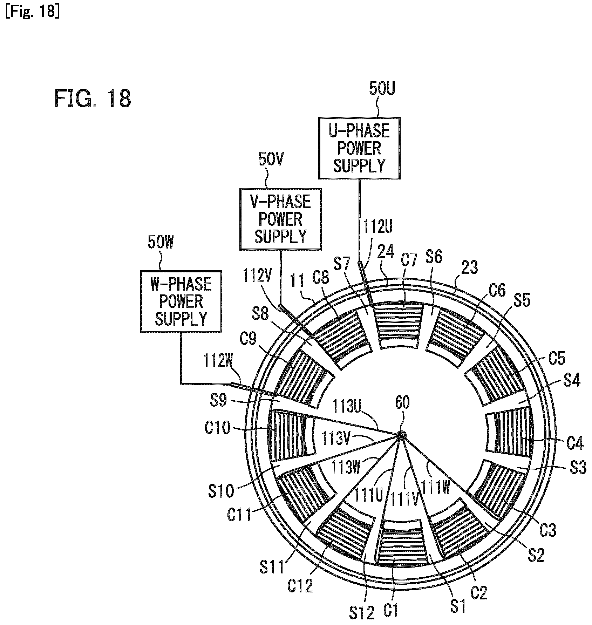

Fig. 18 illustrates the positions from which the lead wires and neutral lines are drawn and the assumed connection topology in the windings of this modification example, in a manner similar to Fig. 5.

As can be seen from Fig. 18, similarly to the case of Fig. 16, the lead wires are drawn out only from three circumferentially consecutive slots S (slots S7 to S9) located on the upper side of the figure. The neutral lines are drawn out only from six circumferentially consecutive slots S (slots S9 to S2) located on the lower left side of the figure.

Accordingly, even with the stator 1 of this modification example and the winding method thereof, an effect of improved work efficiency similar to that in the configuration of the second embodiment described above can be obtained.

As other modifications, it is also conceivable to apply a variation to the winding structures of the second embodiment and the present modification example, in which the winding progression direction is reversed in the circumferential direction of the stator core 10, as described in the first and third modification examples of the first embodiment. Even with such modified configurations, the same effects as those of the original configuration before modification can be achieved, as described with respect to the first and third modification examples of the first embodiment.

A modification may also be applied such that the windings of the three phases differ from one another in their circumferential positions on the stator core 10 by two magnetic pole teeth, as described in the fourth modification example of the first embodiment. However, if this modification is applied to the second embodiment, a reduction in work efficiency during wiring process occurs not only for the lead wires but also for the neutral lines. Therefore, the effect of setting the positional difference to one magnetic pole tooth T for each phase is more significant in the second embodiment than in the first embodiment.

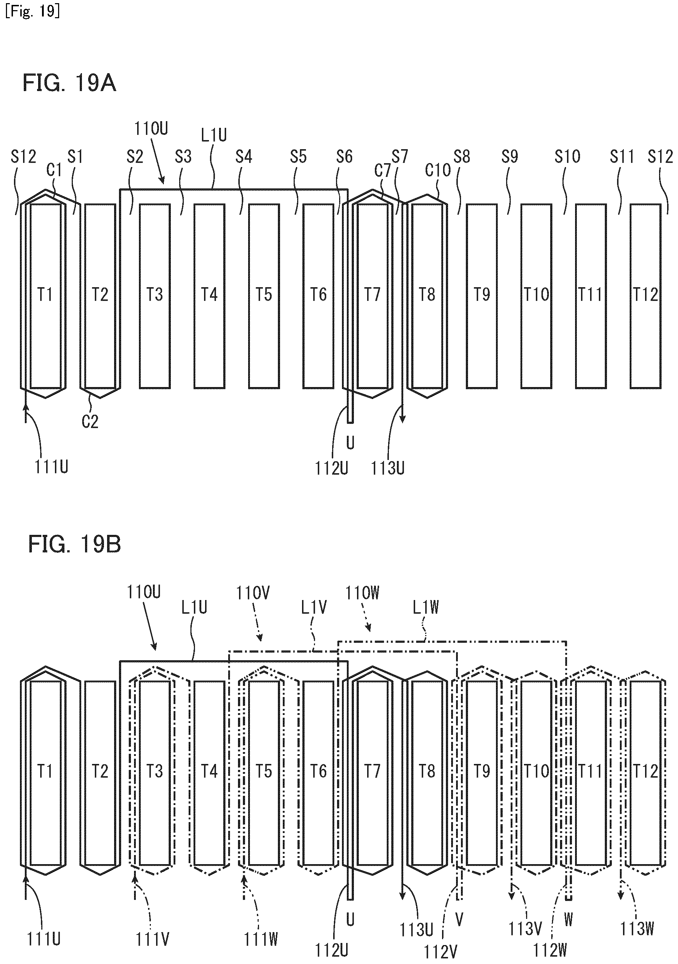

### [Third Embodiment: Fig. 19A to Fig. 21]

Next, a third embodiment of the present invention will be described with reference to Fig. 19A to Fig. 21.

The third embodiment differs from the first embodiment in that the winding structure of the stator 1 assumes a star connection in which, for each phase, two coils C, each wound in series around two adjacent magnetic pole teeth T and having different winding directions on the respective magnetic pole teeth T, are connected in parallel. Other aspects, including the configuration of the stator core 10, are the same as those of the first embodiment.

Fig. 19A and Fig. 19B respectively illustrate the winding structure of the stator 1 in the third embodiment, in a manner similar to Fig. 3A and Fig. 3B. The winding structure of the third embodiment also includes (Feature2) and (Feature3) described in the first embodiment and further includes the following (Feature1'), which is similar to the above-described (Feature1) , and, as with the windings in the first embodiment, allows simultaneous winding of three phases. However, since the circumferential positions of the windings of the respective phases differ from one another by two magnetic pole teeth T, the nozzle arrangement shown in Fig. 7 is used for the nozzles 41U, 41V, and 41W.

(Feature1'): The windings of the respective three phases share a first common winding pattern of the conductor around the magnetic pole teeth T but differ from one another in their circumferential positions on the stator core 10 by two magnetic pole teeth T.

Further, In the windings of the third embodiment, the winding of each phase is not separated into multiple portions as in the first embodiment but is formed with a single conductor. This winding of one phase is denoted by a reference sign such as "110U."

In the windings of the third embodiment, as shown in Fig. 19A, the winding 110U of the U-phase winding starts from an end wire 111U at the winding start, is drawn into the slot S12 (first slot) adjacent to the magnetic pole tooth T1 from the first end face side, and is continuously wound in a clockwise direction (first direction) around the magnetic pole tooth T1 to form the coil C1.

The winding 110U is further wound in a counterclockwise direction (second direction) around the adjacent magnetic pole tooth T2 to form the coil C2. There does not need to be a distinct boundary between the coils C2 and C1, as long as the transition between them occurs appropriately within the slot S1. Accordingly, no linking portion is formed at this location.

After the winding around the magnetic pole tooth T2 is completed at the slot S2 (second slot) adjacent to the magnetic pole tooth T2, the winding 110U is continuously drawn out to the second end face side from the slot S2 and led to the position of the slot S6 (third slot) adjacent to the magnetic pole tooth T7 as a linking portion L1U extending on the second end face side.

The winding 110U is further continuously drawn into the slot S6 from the second end face side, and without being wound around any magnetic pole tooth, the winding 110U is drawn out from the first end face side by a predetermined length and then drawn into the slot S6 again from the first end face side, thereby forming a lead-out portion 112U.

The winding 110U is further continuously wound in a clockwise direction around the magnetic pole tooth T7 to form the coil C7. The conductor on both sides of the lead-out portion 112U is pressed against the magnetic pole tooth T7 and fixed within the slot S6 by the conductor of the coil C7, which is wound over the portion after the lead-out portion 112U has been formed.

The winding 110U is further continuously wound in a counterclockwise direction around the adjacent magnetic pole tooth T8 to form the coil C8. The winding around the magnetic pole tooth T8 is completed at the slot S7 (fourth slot) adjacent to the magnetic pole tooth T8, and the winding 110U is then continuously drawn out to the first end face side from the slot S7, reaching an end wire 113U at the winding end.

There does not need to be a distinct boundary between the coils C7 and C8, as long as the transition between them occurs appropriately within the slot S7. Accordingly, no linking portion is formed also at this location.

Further, as illustrated in Fig. 19B, the windings 110V and 110W of the V-phase and W-phase are located at positions obtained by rotating the above-described winding of the U-phase clockwise as viewed in Fig. 1 (rightward in Fig. 19B) by two and four magnetic pole teeth T, respectively, and have the same winding shape as that of the winding of the U-phase.

In the windings of the third embodiment, since the windings 110 are wound around two adjacent magnetic pole teeth T, it is necessary for the windings of the respective phases to be shifted in the circumferential direction by two magnetic pole teeth T, rather than by one magnetic pole tooth T.

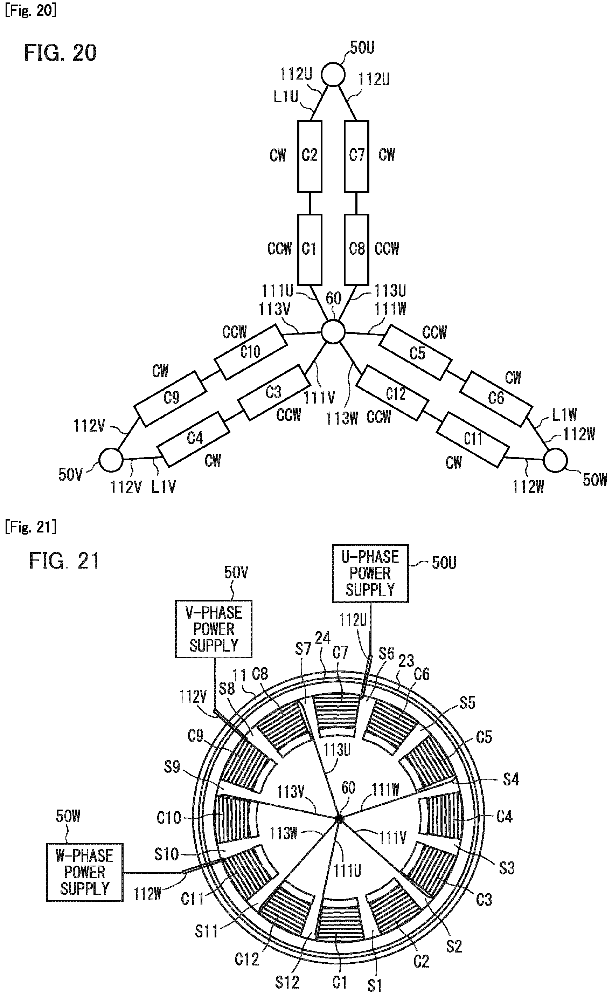

Fig. 20 is a diagram corresponding to Fig. 4, for explaining a star connection structure that can be implemented using the windings shown in Fig. 19B. Fig. 21 is a diagram corresponding to Fig. 5, for explaining a wiring operation to be performed on the windings shown in Fig. 19B to form the star connection shown in Fig. 20.

When manufacturing a motor using the stator 1 shown in Fig. 19B, it is assumed that a star connection will be formed as shown in Fig. 20, in which, for each phase, two circuits, each including two coils C wound around respective magnetic pole teeth T and connected in series, are connected in parallel. In addition, since the two coils C to be connected in series are wound around adjacent magnetic pole teeth T, their current flow directions are set opposite to each other in order to suppress the effects of self-inductance.

Furthermore, a 12-pole stator such as the stator 1 is primarily intended to be used in combination with a 10-pole rotor. In such a case, two opposing permanent magnets among the ten embedded in the rotor have opposite magnetic polarities. Accordingly, the current flow directions of coils C, such as C1 and C7, which are located 180° apart in the circumferential direction, are also set to be opposite to each other.

In Fig. 20, "CW" and "CCW" are symbols indicating whether the direction of current flowing from the power supply 50 to the neutral point 60 is clockwise (CW) or counterclockwise (CCW), as viewed from the center of the stator core 10.

As shown in Fig. 20, for the U-phase, by connecting the lead-out portion 112U to the U-phase power supply 50U, and connecting the end wires 111U and 113U to the neutral point 60, the coils C2 and C1 can be connected in series, the coils C7 and C8 can be connected in series, and further these two series circuits can then be connected in parallel. That is, the lead-out portion 112U can be used as a lead wire, and the end wires 111U and 113U can be used as neutral lines.

For the V-phase as well, by a corresponding connection, a first circuit in which the coils C4 and C3 are connected in series and a second circuit in which the coils C9 and C10 are connected in series can be connected in parallel. Similarly, for the W-phase, a first circuit in which the coils C6 and C5 are connected in series and a second circuit in which the coils C11 and C12 are connected in series can be connected in parallel by a corresponding connection.

For connection to the power supply 50, one lead-out portion 112 for each phase may be connected to the power supply 50 of the corresponding phase. As a result, as in the case of the second embodiment, the wiring work for the lead wires can be performed very easily.

As for the neutral point 60, also as in the second embodiment, all six end wires 111 and 113 for the three phases may be connected to a common neutral point 60.

Further, as can be seen from Fig. 21, the lead wires are drawn out only from five circumferentially consecutive slots S (slots S6 to S10) on the upper left side of the figure. Accordingly, in order to connect the lead wires of the three phases to the corresponding power supplies 50 respectively, it is sufficient to reach toward only approximately one-third of the circumference of the stator core 10, thereby achieving even higher wiring work efficiency than in the first embodiment, although slightly lower than in the second embodiment. Furthermore, as in the second embodiment, high work efficiency can be achieved also because the task of bundling lead wires for each phase is not required. These effects are achieved by (Feature1') and (Feature2) described above.

As can be seen from Fig. 19A and Fig. 19B, the lead-out portion 112, which serves as a lead wire, is fixed within the slot S onto the stator core 10, as in the case of the second embodiment. Accordingly, the wiring work is similarly facilitated due to ease of wire handling during the wiring process. This corresponds to (Feature3) described above.

On the other hand, the neutral lines are drawn out from substantially the entire circumference of the stator core 10, although there are slightly denser and sparser regions. This is an inevitable consequence of the structural constraint that arises from using coils C wound in series around two adjacent magnetic pole teeth T. This embodiment proposes a configuration that enables improved efficiency in wiring lead wires even under such a constraint, thereby achieving the effect of speeding up the winding process.

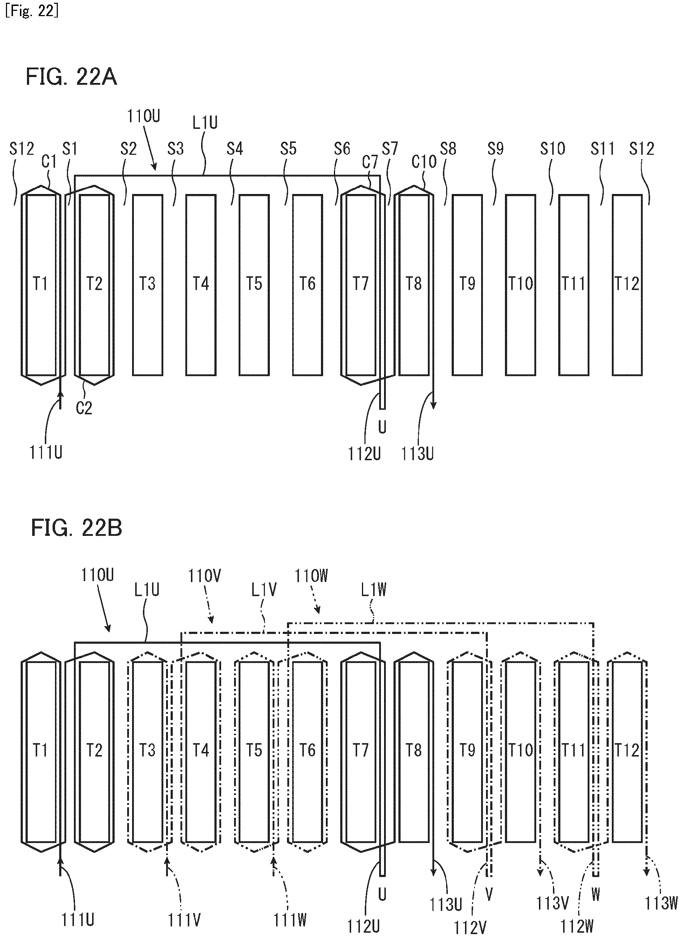

### [Modification Example of the Third Embodiment: Fig. 22A to Fig. 23]

Next, a modification example of the third embodiment will be described with reference to Fig. 22A to Fig. 23. This modification example differs from the third embodiment only in that the direction in which the conductor is wound around each magnetic pole tooth T is reversed, and accordingly, the positions of the slots S through which the conductor passes are changed.

Fig. 22A and Fig. 22B respectively illustrate the winding structure of the stator 1 in this modification example, in a manner similar to Fig. 3A and Fig. 3B.

In this modification example, as shown in Fig. 22A, the winding 110U of the U-phase winding starts from an end wire 111U at the winding start, is drawn into the slot S1 (first slot) adjacent to the magnetic pole tooth T1 from the first end face side, and is continuously wound in a counterclockwise direction (first direction) around the magnetic pole tooth T1 to form the coil C1.

The winding 110U is further wound in a clockwise direction (second direction) around the adjacent magnetic pole tooth T2 to form the coil C2. There does not need to be a distinct boundary between the coils C2 and C1, as long as the transition between them occurs appropriately within the slot S1. Accordingly, no linking portion is formed at this location.

After the winding around the magnetic pole tooth T2 is completed at the slot S1 (second slot) adjacent to the magnetic pole tooth T2, the winding 110U is continuously drawn out to the second end face side from the slot S1 and led to the position of the slot S7 (third slot) adjacent to the magnetic pole tooth T7 as a linking portion L1U extending on the second end face side.

The winding 110U is further continuously drawn into the slot S7 from the second end face side, and without being wound around any magnetic pole tooth, the winding 110U is drawn out from the first end face side by a predetermined length and then drawn into the slot S7 again from the first end face side, thereby forming a lead-out portion 112U.

The winding 110U is further continuously wound in a counterclockwise direction around the magnetic pole tooth T7 to form the coil C7. The conductor on both sides of the lead-out portion 112U is pressed against the magnetic pole tooth T7 and fixed within the slot S7 by the conductor of the coil C7, which is wound over the portion after the lead-out portion 112U has been formed.

The winding 110U is further continuously wound in a clockwise direction around the adjacent magnetic pole tooth T8 to form the coil C8. The winding around the magnetic pole tooth T8 is completed at the slot S8 (fourth slot) adjacent to the magnetic pole tooth T8, and the winding 110U is then continuously drawn out to the first end face side from the slot S8, reaching an end wire 113U at the winding end.

There does not need to be a distinct boundary between the coils C7 and C8, as long as the transition between them occurs appropriately within the slot S7. Accordingly, no linking portion is formed also at this location.

Such winding structure also includes (Feature1') to (Feature3) described above, and as with the windings in the first to third embodiments, allows simultaneous winding of three phases. In addition, connection by a star connection as shown in Fig. 20 is possible. However, the current flow direction of each coil C1 to C12 is opposite to that shown in Fig. 20.

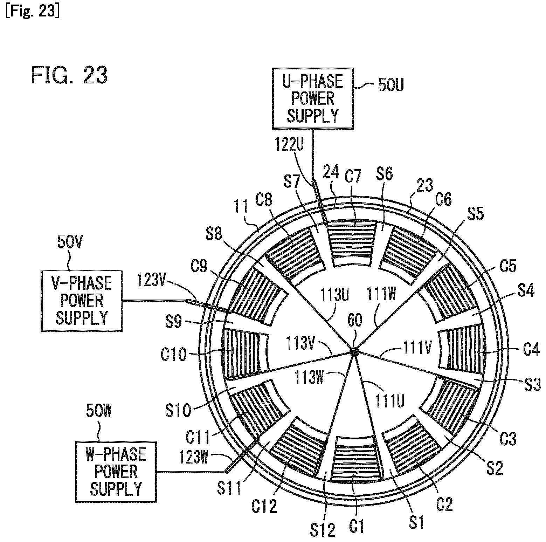

Fig. 23 illustrates the positions from which the lead wires and neutral lines are drawn and the assumed connection topology in the windings of this modification example, in a manner similar to Fig. 5.

As can be seen from Fig. 23, also in the configuration of this modification example, similar to the case of Fig. 21, the lead wires are drawn out only from the range of five circumferentially consecutive slots S (slots S7 to S11) located on the upper left side of the figure.

Accordingly, even with the stator 1 of this modification example and the winding method thereof, an effect of improved work efficiency similar to that of the configuration of the third embodiment described above can be obtained.

As can be seen from Fig. 22A and Fig. 22B, in the windings of this modification example, each linking portion L extends over a length corresponding to approximately six magnetic pole teeth T. In contrast, in the windings shown in Fig. 19A and Fig. 19B, each linking portion L extends over a length corresponding to approximately four magnetic pole teeth T.

In general, shorter linking portions L are preferable from the viewpoints of ease of insulation and noise suppression. From this perspective, the windings of the third embodiment described above is preferable to the windings of this modification example.

As other modifications, it is also conceivable to apply a variation to the winding structures of the third embodiment and the present modification example, in which the winding progression direction is reversed in the circumferential direction of the stator core 10, as described in the first and third modification examples of the first embodiment. Even with such modified configurations, the same effects as those of the original configuration before modification can be achieved, as described with respect to the first and third modification examples of the first embodiment.

While the preferred embodiments and several modifications of the present invention have been described above, the present invention is not limited to the specific embodiments and modifications described herein, and various other changes and modifications may be made without departing from the scope of the invention.

For example, in the embodiments described above, the windings of the three phases, that is, U-phase, V-phase, and W-phase, are arranged in this order at circumferential positions offset from one another by one or two magnetic pole teeth T in the winding progression direction (e.g., to the right in the case of Fig. 3A and Fig. 3B). However, the order of arrangement of the three phases may be changed.

The specific shape and size of the stator core 10 are also not limited to those described in the embodiments. In particular, the insulating member 13 may be provided with structures for positioning the linking portions L, lead wires, and neutral lines.

Furthermore, the configurations described in the embodiments of the present invention may be implemented in part, and the various configurations described above may be combined in any manner as long as there is no contradiction among them. The effects described in the embodiments of the present invention are merely illustrative of the preferable effects derived from the invention, and the effects of the present invention are not limited to those explicitly described in the embodiments.

### [Reference Signs List]

1: stator; 10: stator core; 11: annular portion; 13, 23: insulating member; 14, 24: outer wall; 15: linking portion arrangement section: 16: pin; 17, 27: magnetic pole tooth covering portion; 31: rotation shaft; 32: rotor; 40: nozzle holding unit; 41: nozzle; 41a: advancing and retracting mechanism; 43: conductor; 44: conductor holding unit; 50: power supply; 60: neutral point; 110: first portion or winding; 111, 113: end wire of first portion or winding; 112: lead-out portion of first portion or winding; 120: second portion; 121, 123: end wire of second portion; 122: lead-out portion of second portion; C (C1 to C12): coil; L, L1, L2: linking portion; S (S1 to S12): slot; T (T1 to T12): magnetic pole tooth
(Note: For indicating the configuration of each phase (U-phase, V-phase, and W-phase), the corresponding suffix "U," "V," or "W" is appended to each reference sign, as appropriate.)

## Claims

1. A stator (1) comprising:
a stator core (10) comprising twelve magnetic pole teeth (T) arranged at equal angular intervals on an inner peripheral portion thereof, and slots (S) formed between adjacent magnetic pole teeth (T); and
three-phase windings formed of a conductor (43) and wound around the twelve magnetic pole teeth (T) of the stator core (10),
wherein the winding of each phase comprises, at least at one location, a portion in which the conductor (43) is drawn out from one of the slots (S) to form a lead-out portion (112) and is then returned to the same slot (S), and the conductor (43) on both sides of the lead-out portion (112) is fixed within the one slot (S) by the conductor (43) wound around one of the magnetic pole teeth (T) forming the one slot (S) after the lead-out portion (112) has been formed.

2. The stator (1) according to claim 1,
wherein the winding of each phase is configured to allow wiring in which four coils (C) wound around respective magnetic pole teeth (T) are connected in parallel, and
wherein all lead sections configured to connect the respective four coils (C) of the three phases to power supplies (50) are drawn out from any of six circumferentially consecutive slots (S) among the twelve slots (S) provided around the entire circumference of the stator core (10).

3. The stator (1) according to claim 1,
wherein the winding of each phase comprises a first portion (110) and a second portion (120) formed by separate conductors (43), respectively, and
wherein when two axial end faces of the stator core (10) are defined as a first end face and a second end face, respectively; and
the twelve magnetic pole teeth (T) are defined as, in order toward a first circumferential direction that is one of circumferential directions of the stator core (10), a first tooth (T1) through a twelfth tooth (T12), respectively,
in the first portion (110) of one of the three phases, the conductor (43) is:
drawn into a first slot (S1 or S12) adjacent to the first tooth (T1) from the first end face side;
continuously wound around the first tooth (T1) in a first direction;
continuously drawn out from the first slot (S1 or S12) to the second end face side and routed as a linking portion (L1) along the second end face side to a position of a second slot (S3 or S4) adjacent to the fourth tooth (T4);
continuously drawn into the second slot (S3 or S4) from the second end face side, drawn out to the first end face side without being wound around any magnetic pole tooth (T), pulled out by a predetermined length, and drawn again into the second slot (S3 or S4) from the first end face side to form a first lead-out portion (112), which is the lead-out portion, on the first end face side;
continuously wound around the fourth tooth (T4) in a second direction opposite to the first direction; and
continuously drawn out to the first end face side from a third slot (S4 or S3), which is adjacent to the fourth tooth (T4) and located on a side opposite to the second slot (S3 or S4) with respect to the fourth tooth (T4), and
in the second portion (120) of said one of the three phases, the conductor (43) is:
drawn into a fourth slot (S7 or S6) adjacent to the seventh tooth (T7) from the first end face side;
continuously wound around the seventh tooth (T7) in the first direction;
continuously drawn out to the first end face side from the fifth slot (S6 or S7), which is adjacent to the seventh tooth (T7) and located on a side opposite to the fourth slot (S7 or S6) with respect to the seventh tooth (T7), pulled out by a predetermined length, and drawn again into the fifth slot (S6 or S7) from the first end face side to form a second lead-out portion (122) on the first end face side;
continuously drawn out from the fifth slot (S6 or S7) to the second end face side and routed as a linking portion (L2) along the second end face side to a position of a sixth slot (S10 or S9) adjacent to the tenth tooth (T10);
continuously drawn into the sixth slot (S10 or S9) from the second end face side;
continuously wound around the tenth tooth (T10) in the second direction; and
continuously drawn out to the first end face side from the sixth slot (S10 or S9), preferably
wherein the first slot (S1) is located between the first tooth (T1) and the second tooth (T2), the second slot (S3) is located between the fourth tooth (T4) and the third tooth (T3), the third slot (S4) is located between the fourth (T4) tooth and the fifth tooth (T5), the fourth slot (S7) is located between the seventh tooth (T7) and the eighth tooth (T8), the fifth slot (S6) is located between the seventh tooth (T7) and the sixth tooth (T6), and the sixth slot (S10) is located between the tenth tooth (T10) and the eleventh tooth (T11),
or
wherein the first slot (S12) is located between the first tooth (T1) and the twelfth tooth (T12), the second slot (S4) is located between the fourth tooth (T4) and the fifth tooth (T5), the third slot (S3) is located between the fourth tooth (T4) and the third tooth (T3), the fourth slot (S6) is located between the seventh tooth (T7) and the sixth tooth (T6), the fifth slot (S7) is located between the seventh tooth (T7) and the eighth tooth (T8), and the sixth slot (S9) is located between the tenth tooth (T10) and the ninth tooth (T9),
further preferably
wherein the windings of the three phases differ from one another in their circumferential positions by one magnetic pole tooth (T),
further preferably
wherein all end wires (111, 113, 121, and 123) of the first portion (110) and the second portion (120) of each phase are connected to a common neutral point (60), and for each phase, the first lead-out portion (112) and the second lead-out portion (122) are gathered to form a lead section configured to be connected to a power supply (50) of the corresponding phase.

4. The stator (1) according to claim 1,
wherein all lead sections configured to connect the windings of the three phases to power supplies (50) are drawn out from any of three circumferentially consecutive slots (S) among the twelve slots (S) provided around the entire circumference of the stator core (10).

5. The stator (1) according to claim 1,
wherein when two axial end faces of the stator core (10) are defined as a first end face and a second end face, respectively; and
the twelve magnetic pole teeth (T) are defined as, in order toward a first circumferential direction that is one of circumferential directions of the stator core (10), a first tooth (T1) through a twelfth tooth (T12), respectively,
in the winding of one of the three phases, the conductor (43) is:
drawn into a first slot (S1 or S12) adjacent to the first tooth (T1) from the first end face side;
continuously wound around the first tooth (T1) in a first direction;
continuously drawn out from the first slot (S1 or S12) to the second end face side and routed as a linking portion (L1) along the second end face side to a position of a second slot (S3 or S4) adjacent to the fourth tooth (T4);
continuously drawn into the second slot (S3 or S4) from the second end face side;
continuously wound around the fourth tooth (T4) in the first direction;
continuously drawn out from the third slot (S4 or S3), which is adjacent to the fourth tooth (T4) and located on a side opposite to the second slot (S3 or S4) with respect to the fourth tooth (T4), to the second end face side and routed as a linking portion (L2) along the second end face side to a position of a fourth slot (S6 or S7) adjacent to the seventh tooth (T7);
continuously drawn into the fourth slot (S6 or S7) from the second end face side, drawn out to the first end face side without being wound around any magnetic pole tooth (T), pulled out by a predetermined length, and drawn again into the fourth slot (S6 or S7) from the first end face side to form the lead-out portion (112) on the first end face side;
continuously wound around the seventh tooth (T7) in a second direction opposite to the first direction;
continuously drawn out from the fourth slot (S6 or S7) to the second end face side and routed as a linking portion (L3) along the second end face side to a position of a fifth slot (S10 or S9) adjacent to the tenth tooth (T10);
continuously drawn into the fifth slot (S10 or S9) from the second end face side;
continuously wound around the tenth tooth (T10) in the second direction; and
continuously drawn out to the first end face side from the fifth slot (S10 or S9), preferably
wherein the first slot (S1) is located between the first tooth (T1) and the second tooth (T2), the second slot (S3) is located between the fourth tooth (T4) and the third tooth (T3), the third slot (S4) is located between the fourth tooth (T4) and the fifth tooth (T5), the fourth slot (S6) is located between the seventh tooth (T7) and the sixth tooth (T6), and the fifth slot (S10) is located between the tenth tooth (T10) and the eleventh tooth (T11),
or
wherein the first slot (S12) is located between the first tooth (T1) and the twelfth tooth (T12), the second slot (S4) is located between the fourth tooth (T4) and the fifth tooth (T5), the third slot (S3) is located between the fourth tooth (T4) and the third tooth (T3), the fourth slot (S7) is located between the seventh tooth (T7) and the eighth tooth (T8), and the fifth slot (S9) is located between the tenth tooth (T10) and the ninth tooth (T9),
further preferably
wherein the windings of the three phases differ from one another in their circumferential positions by one magnetic pole tooth (T),
further preferably
wherein all end wires (111 and 113) of the windings of the three phases are connected to a common neutral point (60), and for each phase, the lead-out portion (112) forms a lead section configured to be connected to a power supply (50) of the corresponding phase.

6. The stator (1) according to claim 1,
wherein the winding of each phase comprises two coils (C), each wound in series around two adjacent magnetic pole teeth (T) and having different winding directions on the respective magnetic pole teeth (T), and
wherein all lead sections configured to connect the two coils (C) of each of the three phases to power supplies (50) are drawn out from any of five circumferentially consecutive slots (S) among the twelve slots (S) provided around the entire circumference of the stator core (10).

7. The stator (1) according to claim 1,
wherein when two axial end faces of the stator core (10) are defined as a first end face and a second end face, respectively; and
the twelve magnetic pole teeth (T) are defined as, in order toward a first circumferential direction that is one of circumferential directions of the stator core (10), a first tooth (T1) through a twelfth tooth (T12), respectively,
in the winding of one of the three phases, the conductor (43) is:
drawn into a first slot (S12 or S1) adjacent to the first tooth (T1) from the first end face side;
continuously wound around the first tooth (T1) in a first direction;
continuously wound around the second tooth (T2) in a second direction opposite to the first direction;
drawn out to the second end face side from a second slot (S2 or S1) adjacent to the second tooth (T2), after completing the winding around the second tooth (T2) at the second slot (S2 or S1), and routed as a linking portion (L1) along the second end face side to a position of a third slot (S6 or S7) adjacent to the seventh tooth (T7);
continuously drawn into the third slot (S6 or S7) from the second end face side, drawn out to the first end face side without being wound around any magnetic pole tooth (T), pulled out by a predetermined length, and drawn again into the third slot (S6 or S7) from the first end face side to form the lead-out portion (112) on the first end face side;
continuously wound around the seventh tooth (T7) in the first direction;
continuously wound around the eighth tooth (T8) in the second direction; and
drawn out to the first end face side from a fourth slot (S7 or S8) adjacent to the eighth tooth (T8), after completing the winding around the eighth tooth (T8) at the fourth slot (S7 or S8), preferably
wherein the first slot (S12) is located between the first tooth (T1) and the twelfth tooth (T12), the second slot (S2) is located between the second tooth (T2) and the third tooth (T3), the third slot (S6) is located between the seventh tooth (T7) and the sixth tooth (T6), and the fourth slot (S7) is located between the eighth tooth (T8) and the seventh tooth (T7),
or
wherein the first slot (S1) is located between the first tooth (T1) and the second tooth (T2), the second slot (S1) is located between the second tooth (T2) and the first tooth (T1), the third slot (S7) is located between the seventh tooth (T7) and the eighth tooth (T8), and the fourth slot (S8) is located between the eighth tooth (T8) and the ninth tooth (T9),
further preferably
wherein the windings of the three phases differ from one another in their circumferential positions by two magnetic pole teeth (T),
further preferably
wherein all end wires (111 and 113) of the windings of the three phases are connected to a common neutral point (60), and for each phase, the lead-out portion (112) forms a lead section configured to be connected to a power supply (50) of the corresponding phase.

8. An electrical rotating machine comprising the stator (1) according to any one of claims 1 to7.

9. A stator winding method of winding three-phase windings, with a conductor (43), around twelve magnetic pole teeth (T) arranged at equal angular intervals on an inner peripheral portion of a stator core (10) configured to constitute a three-phase, twelve-pole stator (1),
wherein slots (S) are formed between adjacent magnetic pole teeth (T),
wherein the winding of one of the three phases is formed by a process through movement of at least one of: a first nozzle (41) corresponding to the one phase (110); and the stator core (10), while feeding the conductor (43) from the first nozzle (41), the process including:
drawing the first nozzle (41) out from one of the slots (S) to one end face side of the stator core (10), pulling out the conductor (43) by a predetermined length, and then re-inserting the first nozzle (41) into the one slot (S) from the one end face side, thereby forming a lead-out portion (112) of the conductor (43) on the one end face side.

10. The stator winding method according to claim 9,
wherein the winding of each phase comprises a first portion (110) and a second portion (120) formed by separate conductors (43), respectively, and
wherein when two axial end faces of the stator core (10) are defined as a first end face, which is said one end face, and a second end face, respectively; and
the twelve magnetic pole teeth (T) are defined as, in order toward a first circumferential direction that is one of circumferential directions of the stator core (10), a first tooth (T1) through a twelfth tooth (T12), respectively,
the first portion (110) of said one of the three phases is formed by, through movement of at least one of: the first nozzle (41) corresponding to the first portion (110); and the stator core (10), while feeding the conductor (43) from the first nozzle (41):
inserting the first nozzle (41) into a first slot (S1 or S12) adjacent to the first tooth (T1) from the first end face side;
then winding the conductor (43) around the first tooth (T1) in a first direction;
then drawing the first nozzle (41) out from the first slot (S1 or S12) to the second end face side, and relatively rotating the first nozzle (41) with respect to the stator core (10) to a position of a second slot (S3 or S4) adjacent to the fourth tooth (T4), thereby forming a linking portion (L1) on the second end face side;
then inserting the first nozzle (41) into the second slot (S3 or S4) from the second end face side, drawing the first nozzle (41) out to the first end face side and pulling out the conductor (43) by a predetermined length without passing through any step of winding the conductor (43) around a magnetic pole tooth (T), and then re-inserting the first nozzle (41) into the second slot (S3 or S4) from the first end face side, thereby forming a first lead-out portion (112) , which is the lead-out portion, of the conductor (43) on the first end face side;
then winding the conductor (43) around the fourth tooth (T4) in a second direction opposite to the first direction; and
then drawing the first nozzle (41) out to the first end face side of a third slot (S4 or S3), which is adjacent to the fourth tooth (T4) and located on a side opposite to the second slot (S3 or S4) with respect to the fourth tooth (T4), and
the second portion (120) of said one of the three phases is formed by, through movement of at least one of: a second nozzle (41) corresponding to the second portion (120); and the stator core (10), while feeding the conductor (43) from the second nozzle (41):
inserting the second nozzle (41) into a fourth slot (S7 or S6) adjacent to the seventh tooth (T7) from the first end face side;
then winding the conductor (43) around the seventh tooth (T7) in the first direction;
then drawing the second nozzle (41) out to the first end face side from the fifth slot (S6 or S7), which is adjacent to the seventh tooth (T7) and located on a side opposite to the fourth slot (S7 or S6) with respect to the seventh tooth (T7), pulling out the conductor (43) by a predetermined length, and then re-inserting the second nozzle (41) into the fifth slot (S6 or S7) from the first end face side, thereby forming a second lead-out portion (122) of the conductor (43) on the first end face side;
then drawing the second nozzle (41) out from the fifth slot (S6 or S7) to the second end face side, and relatively rotating the second nozzle (41) with respect to the stator core (10) to a position of a sixth slot (S10 or S9) adjacent to the tenth tooth (T10), thereby forming a linking portion (L2) on the second end face side;
then inserting the second nozzle (41) into the sixth slot (S10 or S9) from the second end face side
then winding the conductor (43) around the tenth tooth (T10) in the second direction; and
then drawing the second nozzle (41) out to the first end face side of the sixth slot (S10 or S9),
preferably
wherein the first slot (S1) is located between the first tooth (T1) and the second tooth (T2), the second slot (S3) is located between the fourth tooth (T4) and the third tooth (T3), the third slot (S4) is located between the fourth tooth (T4) and the fifth tooth (T5), the fourth slot (S7) is located between the seventh tooth (T7) and the eighth tooth (T8), the fifth slot (S6) is located between the seventh tooth (T7) and the sixth tooth (T6), and the sixth slot (S10) is located between the tenth tooth (T10) and the eleventh tooth (T11),
or
wherein the first slot (S12) is located between the first tooth (T1) and the twelfth tooth (T12), the second slot (S4) is located between the fourth tooth (T4) and the fifth tooth (T5), the third slot (S3) is located between the fourth tooth (T4) and the third tooth (T3), the fourth slot (S6) is located between the seventh tooth (T7) and the sixth tooth (T6), the fifth slot (S7) is located between the seventh tooth (T7) and the eighth tooth (T8), and the sixth slot (S9) is located between the tenth tooth (T10) and the ninth tooth (T9),
further preferably
wherein the windings of the three phases differ from one another in their circumferential positions by one magnetic pole tooth (T).

11. A stator manufacturing method comprising forming a star connection in which, for each phase, four coils (C) each wound around one magnetic pole tooth (T) are connected in parallel, through:
winding the three-phase windings around the stator core (10) by the stator winding method according to claim 10;
then connecting all end wires (111, 113, 121, and 123) of the first portion (110) and the second portion (120) of each phase to a common neutral point (60); and
connecting, for each phase, the first lead-out portion (112) and the second lead-out portion (122) to a power supply (50) of the corresponding phase.

12. The stator winding method according to claim 9,
wherein when two axial end faces of the stator core (10) are defined as a first end face, which is said one end face, and a second end face, respectively; and
the twelve magnetic pole teeth (T) are defined as, in order toward a first circumferential direction that is one of circumferential directions of the stator core (10), a first tooth (T1) through a twelfth tooth (T12), respectively,
the winding of said one of the three phases is formed by, through movement of at least one of: the first nozzle (41) corresponding to the one phase; and the stator core (10), while feeding the conductor (43) from the first nozzle (41):
inserting the first nozzle (41) into a first slot (S1 or S12) adjacent to the first tooth (T1) from the first end face side;
then winding the conductor (43) around the first tooth (T1) in a first direction;
then drawing the first nozzle (41) out from the first slot (S1 or S12) to the second end face side, and relatively rotating the first nozzle (41) with respect to the stator core (10) to a position of a second slot (S3 or S4) adjacent to the fourth tooth (T4), thereby forming a linking portion (L1) on the second end face side;
then inserting the first nozzle (41) into the second slot (S3 or S4) from the second end face side;
then winding the conductor (43) around the fourth tooth (T4) in the first direction;
then drawing the first nozzle (41) out from the third slot (S4 or S3), which is adjacent to the fourth tooth (T4) and located on a side opposite to the second slot (S3 or S4) with respect to the fourth tooth (T4), to the second end face side, and relatively rotating the first nozzle (41) with respect to the stator core (10) to a position of a fourth slot (S6 or S7) adjacent to the seventh tooth (T7), thereby forming a linking portion (L2) on the second end face side;
then inserting the first nozzle (41) into the fourth slot (S6 or S7) from the second end face side, drawing the first nozzle (41) out to the first end face side and pulling out the conductor (43) by a predetermined length without passing through any step of winding the conductor (43) around a magnetic pole tooth (T), and then re-inserting the first nozzle (41) into the fourth slot (S6 or S7) from the first end face side, thereby forming the lead-out portion (112) of the conductor (43) on the first end face side;
then winding the conductor (43) around the seventh tooth (T7) in a second direction opposite to the first direction;
then drawing the first nozzle (41) out from the fourth slot (S6 or S7) to the second end face side, and relatively rotating the first nozzle (41) with respect to the stator core (10) to a position of a fifth slot (S10 or S9) adjacent to the tenth tooth (T10), thereby forming a linking portion (L3) on the second end face side;
then inserting the first nozzle (41) into the fifth slot (S10 or S9) from the second end face side;
then winding the conductor (43) around the tenth tooth (T10) in the second direction; and
then drawing the first nozzle (41) out to the first end face side of the fifth slot (S10 or S9),
preferably
wherein the first slot (S1) is located between the first tooth (T1) and the second tooth (T2), the second slot (S3) is located between the fourth tooth (T4) and the third tooth (T3), the third slot (S4) is located between the fourth tooth (T4) and the fifth tooth (T5), the fourth slot (S6) is located between the seventh tooth (T7) and the sixth tooth (T6), and the fifth slot (S10) is located between the tenth tooth (T10) and the eleventh tooth (T11),
or
wherein the first slot (S12) is located between the first tooth (T1) and the twelfth tooth (T12), the second slot (S4) is located between the fourth tooth (T4) and the fifth tooth (T5), the third slot (S3) is located between the fourth tooth (T4) and the third tooth (T3), the fourth slot (S7) is located between the seventh (T7) tooth and the eighth tooth (T8), and the fifth slot (S9) is located between the tenth tooth (T10) and the ninth tooth (T9),
further preferably
wherein the windings of the three phases differ from one another in their circumferential positions by one magnetic pole tooth (T).

13. A stator manufacturing method comprising forming a star connection in which, for each phase, two coils (C), each wound in series around two magnetic pole teeth (T), are connected in parallel, through:
winding the three-phase windings around the stator core (10) by the stator winding method according to claim 12;
then connecting all end wires (111 and 113) of the winding of each phase to a common neutral point (60); and
connecting, for each phase, the lead-out portion (112) to a power supply (50) of the corresponding phase.

14. The stator winding method according to claim 9,
wherein when two axial end faces of the stator core (10) are defined as a first end face, which is said one end face, and a second end face, respectively; and
the twelve magnetic pole teeth (T) are defined as, in order toward a first circumferential direction that is one of circumferential directions of the stator core (10), a first tooth (T1) through a twelfth tooth (T12), respectively,
the winding of said one of the three phases is formed by, through movement of at least one of: the first nozzle (41) corresponding to the one phase; and the stator core (10), while feeding the conductor (43) from the first nozzle (41):
inserting the first nozzle (41) into a first slot (S12 or S1) adjacent to the first tooth (T1) from the first end face side;
then winding the conductor (43) around the first tooth (T1) in a first direction;
directly thereafter, winding the conductor (43) around the second tooth (T2) in a second direction opposite to the first direction; and
then completing the winding around the second tooth (T2) at a second slot (S2 or S1) adjacent to the second tooth (T2), drawing the first nozzle (41) out from the second slot (S2 or S1) to the second end face side, and relatively rotating the first nozzle (41) with respect to the stator core (10) to a position of a third slot (S6 or S7) adjacent to the seventh tooth (T7), thereby forming a linking portion (L1) on the second end face side;
then inserting the first nozzle (41) into the third slot (S6 or S7) from the second end face side, drawing the first nozzle (41) out to the first end face side and pulling out the conductor (43) by a predetermined length without passing through any step of winding the conductor (43) around a magnetic pole tooth (T), and then re-inserting the first nozzle (41) into the third slot (S6 or S7) from the first end face side, thereby forming the lead-out portion (112) of the conductor (43) on the first end face side;
then winding the conductor (43) around the seventh tooth (T7) in the first direction;
directly thereafter, winding the conductor (43) around the eighth tooth (T8) in the second direction; and
then completing the winding around the eighth tooth (T8) at a fourth slot (S7 or S8) adjacent to the eighth slot (T8), and drawing the first nozzle (41) out to the first end face side of the fourth slot (S7 or S8),
preferably
wherein the first slot (S12) is located between the first tooth (T1) and the twelfth tooth (T12), the second slot (S2) is located between the second tooth (T2) and the third tooth (T3), the third slot (S6) is located between the seventh tooth (T7) and the sixth tooth (T6), and the fourth slot (S7) is located between the eighth tooth (T8) and the seventh tooth (T7),
or
wherein the first slot (S1) is located between the first tooth (T1) and the second tooth (T2), the second slot (S1) is located between the second tooth (T2) and the first tooth (T1), the third slot (S7) is located between the seventh tooth (T7) and the eighth tooth (T8), and the fourth slot (S8) is located between the eighth tooth (T8) and the ninth tooth (T9),
further preferably
wherein the windings of the three phases differ from one another in their circumferential positions by two magnetic pole teeth (T).

15. A stator manufacturing method comprising forming a star connection in which, for each phase, two coils (C), each wound in series around two magnetic pole teeth (T) and having different winding directions on the respective magnetic pole teeth (T), are connected in parallel, through:
winding the three-phase windings around the stator core (10) by the stator winding method according to claim 14;
then connecting all end wires (111 and 113) of the winding of each phase to a common neutral point (60); and
connecting, for each phase, the lead-out portion (112) to a power supply (50) of the corresponding phase.
